# EUROPEAN PATENT APPLICATION

(11) **EP 4 694 536 A1**
(43) Date of publication of application: **11.02.2026**
(21) Application number: 24839942.0
(22) Date of filing: 25.06.2024
(51) Int. Cl.: H04W 74/0816, H04L 5/00, H04J 3/16, H04L 69/24, H04W 84/12, H04W 28/18, H04W 74/04, H04W 72/0453, H04W 72/50

(54) **METHOD AND APPARATUS FOR PERFORMING NEGOTIATION FOR C-TDMA OPERATION IN MULTI-AP COMMUNICATION IN WIRELESS LAN SYSTEM**

(30) Priority: 07.07.2023 KR 20230088498; 20.07.2023 KR 20230094789; 31.07.2023 KR 20230099821; 31.07.2023 KR 20230099822; 14.11.2023 KR 20230157421
(71) Applicant: LG Electronics Inc., Yeongdeungpo-gu Seoul 07336 (KR)
(72) Inventor: KIM, Geonhwan, Seoul 06772 (KR); CHOI, Jinsoo, Seoul 06772 (KR); JANG, Insun, Seoul 06772 (KR); BAEK, Sunhee, Seoul 06772 (KR); YOON, Yelin, Seoul 06772 (KR); CHA, Dongju, Seoul 06772 (KR)
(74) Representative: Plasseraud IP
(86) International application number: PCT/KR2024/008798
(87) International publication number: WO 2025/014128

(57) **Abstract**

Proposed are a method and an apparatus for performing negotiation for a C-TDMA operation in multi-AP communication in a wireless LAN system. Specifically, a first AP transmits a coordination request frame to a second AP. The first AP receives a coordination response frame from the second AP. The first AP receives allocation information of a part of a TXOP on the basis of the coordination request frame and the coordination response frame. The first AP exchanges frames with a first non-AP STA during the part of the TXOP.

## Description

### TECHNICAL FIELD

This specification relates to a technique for performing negotiation for C-TDMA operation in multi-AP communication in a wireless LAN system, and more specifically, to a method and device for defining and exchanging information required for negotiation between multiple APs.

### BACKGROUND ART

A wireless local area network (WLAN) has been improved in various ways. For example, the IEEE 802.11ax standard proposed an improved communication environment using orthogonal frequency division multiple access (OFDMA) and downlink multi-user multiple input multiple output (DL MU MIMO) techniques.

The present specification proposes a technical feature that can be utilized in a new communication standard. For example, the new communication standard may be an extreme high throughput (EHT) standard which is currently being discussed. The EHT standard may use an increased bandwidth, an enhanced PHY layer protocol data unit (PPDU) structure, an enhanced sequence, a hybrid automatic repeat request (HARQ) scheme, or the like, which is newly proposed. The EHT standard may be called the IEEE 802.11be standard.

In a new WLAN standard, an increased number of spatial streams may be used. In this case, in order to properly use the increased number of spatial streams, a signaling technique in the WLAN system may need to be improved.

### DISCLOSURE

### TECHNICAL PROBLEM

This specification proposes a method and device performing negotiation for C-TDMA operation in multi-AP communication in a wireless LAN system.

### TECHNICAL SOLUTION

An example of this specification proposes a method for performing negotiation for C-TDMA operation in multi-AP communication.

This embodiment may be performed in a network environment that supports a next-generation wireless LAN system (Ultra High Reliability (UHR) wireless LAN system or next Wi-Fi). The next-generation wireless LAN system is an improved version of the 802.11be system and can satisfy backward compatibility with the 802.11be system.

This embodiment may be performed in a first AP, and the first AP and the second AP may be configured as a shared AP or a sharing AP after the coordination/negotiation phase in multi-AP communication. The first non-AP STA of this embodiment may correspond to at least one station (STA).

This embodiment proposes a method for performing negotiation between APs to perform C-TDMA operation in multi-access point (multi-AP) communication (or multi-AP operation). In particular, this embodiment proposes a method for defining information required for negotiation to perform C-TDMA operation. Furthermore, this embodiment is not limited to the C-TDMA scheme, and other coordinated multi-AP schemes such as C-SR and CBF may be applied.

A first access point (AP) transmits a coordination/negotiation request frame to a second AP.

The first AP receives a coordination/negotiation response frame from the second AP.

The first AP receives allocation information for a portion of the Transmission Opportunity (TXOP) from the second AP based on the coordination/negotiation request frame and the coordination/negotiation response frame.

The first AP performs frame exchange with a first non-AP station (STA) during the portion of the TXOP.

The coordination/negotiation request frame includes negotiation information for coordination between the multiple APs. The coordination/negotiation response frame includes information for an acceptance or rejection to the coordination/negotiation request frame based on the negotiation information.

After the second AP obtains the TXOP based on the coordination/negotiation request frame and the coordination/negotiation response frame, the second AP is set as a Sharing AP that controls coordination between the multiple APs, and the first AP is set as a Shared AP that is allocated or shared with resources from the Sharing AP based on the negotiation information. The first non-AP STA is a non-AP STA within a basic service set (BSS) of the first AP. That is, at the time of performing the negotiation procedure based on the coordination/negotiation request frame and the coordination/negotiation response frame, the roles of the first and second APs as Sharing APs or Shared APs may not be determined. After the negotiation procedure is completed and a specific AP obtains the TXOP, the AP may function as a Sharing AP, and the other AP that is allocated or shared with resources such as the TXOP may function as a Shared AP.

That is, the present embodiment proposes a method for performing negotiation between multiple APs to perform a transmission scheme for coordination between multiple APs (or coordination between APs in a multi-AP environment). Furthermore, the present embodiment proposes a method for defining information to be exchanged between the multiple APs during the negotiation process.

### ADVANTAGEOUS EFFECTS

According to the embodiment proposed in this specification, based on the proposed negotiation information, APs that have successfully cooperated can perform a coordinated multi-AP scheme such as C-TDMA. In addition, based on the proposed negotiation information, the Sharing AP can share a TXOP with the Shared AP, and through this, the Shared AP may perform frame exchange with a non-AP STA (or UHR non-AP STA) within its BSS during the allocated TXOP. In addition, by proposing a negotiation method to effectively perform communication between the multiple APs, it is possible to perform appropriate scheduling between each AP, and thereby, it is possible to expect an increase in the overall network throughput.

### BRIEF DESCRIPTION OF THE DRAWINGS

FIG. 1 shows an example of a transmitting apparatus and/or receiving apparatus of the present specification.
FIG. 2 is a conceptual view illustrating the structure of a wireless local area network (WLAN).
FIG. 3 illustrates a general link setup process.
FIG. 4 shows an example of a multi-link (ML).
FIG. 5 shows an example of a physical protocol data unit or physical layer (PHY) protocol data unit (PPDU) transmitted/received by an STA of the present disclosure.
FIG. 6 is a diagram illustrating the layout of resource units (RUs) used for a 20 MHz PPDU.
FIG. 7 is a diagram illustrating the layout of resource units (RUs) used for 40MHz PPDU.
FIG. 8 is a diagram illustrating the layout of resource units (RUs) used for an 80MHz PPDU.
FIG. 9 shows an operation related to UL-MU.
FIG. 10 illustrates an example of channels used/supported/defined within the 2.4 GHz band.
FIG. 11 illustrates an example of channels used/supported/defined within the 5 GHz band.
FIG. 12 illustrates an example of channels used/supported/defined within the 6 GHz band.
FIG. 13 illustrates an example of a modified transmission device and/or receiving device of the present specification.
FIG. 14 illustrates operation according to a conventional STX operation.
FIG. 15 illustrates an example of Coordinated OFDMA (C-OFDMA).
FIG. 16 illustrates an example of Coordinated Beamforming (CBF).
FIG. 17 illustrates an example of AP selection.
FIG. 18 illustrates an example of JTX/JT.
FIG. 19 illustrates an example of the operation of a MU-RTS TXS trigger frame in which the TXOP Sharing Mode subfield value is 2.
FIG. 20 illustrates an example of coordinated TDMA operation, including a negotiation process.
FIG. 21 illustrates an example of a C-TDMA operation based on Pair-to-pair based Negotiation, including UHR STA support information.
FIG. 22 illustrates an example of a C-TDMA operation based on Broadcast based Negotiation, including UHR STA support information.
FIG. 23 illustrates an example of a PPDU of the present specification.
FIG. 24 illustrates a procedure for a transmitting device according to the present embodiment to perform negotiations necessary for performing a C-TDMA operation.
FIG. 25 illustrates a procedure for a receiving device according to the present embodiment to perform negotiations necessary for performing a C-TDMA operation.
FIG. 26 illustrates a transmitting device performing negotiations necessary for performing a C-TDMA operation according to the present embodiment.
FIG. 27 illustrates a receiving device performing negotiations necessary for performing a C-TDMA operation according to the present embodiment.
FIG. 28 is a flowchart illustrating the operation of a transmitting device according to the present embodiment.
FIG. 29 is a flowchart illustrating the operation of a receiving device according to the present embodiment.
FIG. 30 is a flowchart illustrating a procedure for performing negotiation to perform C-TDMA operation on the Sharing AP side according to the present embodiment.
FIG. 31 is a flowchart illustrating a procedure for performing negotiation to perform C-TDMA operation on the Shared AP side according to the present embodiment.

### MODE FOR INVENTION

In the present disclosure, "A or B" may mean "only A", "only B" or "both A and B". In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, a parenthesis used in the present disclosure may mean "for example". Specifically, when indicated as "control information (UHR-signal field)", it may mean that "UHR-signal field" is proposed as an example of the "control information". In other words, the "control information" of the present disclosure is not limited to "UHR-signal field", and "UHR-signal field" may be proposed as an example of the "control information". In addition, when indicated as "control information (i.e., UHR-signal field)", it may also mean that "UHR-signal field" is proposed as an example of the "control information".

Also, "a/an" as used in this disclosure can mean "at least one" or "one or more." Also, a term ending with "(s)" can mean "at least one" or "one or more."

Also, the expressions "based on" or "on the basis of" or "according to" as used in this disclosure mean "based at least in part on," and do not mean "based sonly on."

Technical features described individually in one figure in the present disclosure may be individually implemented, or may be simultaneously implemented.

The following example of the present disclosure may be applied to various wireless communication systems. For example, the following example of the present disclosure may be applied to a wireless local area network (WLAN) system. For example, the present disclosure may be applied to the IEEE 802.11a/g/n/ac/ax/be/bn standard. In addition, an example of the present disclosure can also be applied to a next-generation wireless LAN standard that enhances the Ultra High Reliability (UHR) standard or IEEE 802.11bn. In addition, the example of the present disclosure may also be applied to a new WLAN standard enhanced from the EHT standard or the IEEE 802.11be standard. In addition, the example of the present disclosure may be applied to a mobile communication system. For example, it may be applied to a mobile communication system based on long term evolution (LTE) depending on a 3rd generation partnership project (3GPP) standard and based on evolution of the LTE. In addition, the example of the present disclosure may be applied to a communication system of a 5G NR standard based on the 3GPP standard.

Hereinafter, in order to describe a technical feature of the present disclosure, a technical feature applicable to the present disclosure will be described.

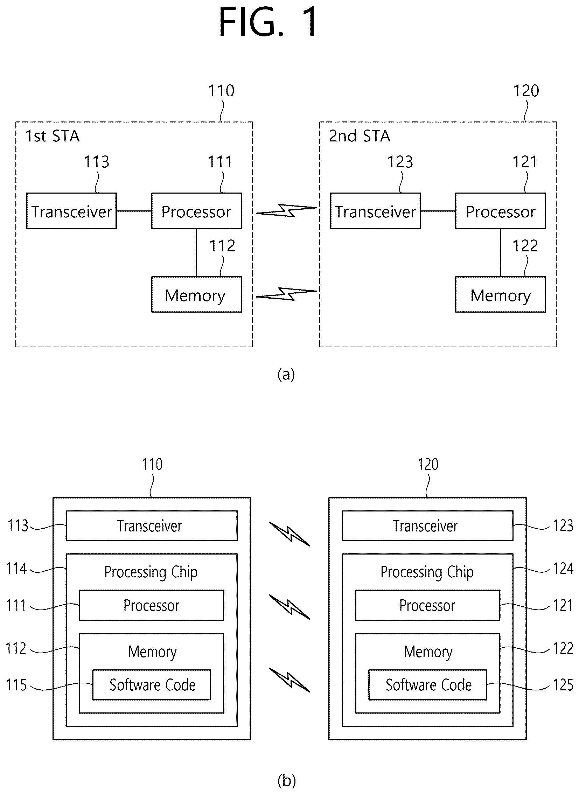

FIG. 1 shows an example of a transmitting apparatus and/or receiving apparatus of the present disclosure.

In the example of FIG. 1, various technical features described below may be performed. FIG. 1 relates to at least one station (STA). For example, STAs 110 and 120 of the present disclosure may also be called in various terms such as a mobile terminal, a wireless device, a wireless transmit/receive unit (WTRU), a user equipment (UE), a mobile station (MS), a mobile subscriber unit, or simply a user. The STAs 110 and 120 of the present disclosure may also be called in various terms such as a network, a base station, a node-B, an access point (AP), a repeater, a router, a relay, or the like. The STAs 110 and 120 of the present disclosure may also be referred to as various names such as a receiving apparatus, a transmitting apparatus, a receiving STA, a transmitting STA, a receiving device, a transmitting device, or the like.

For example, the STAs 110 and 120 may serve as an AP or a non-AP. That is, the STAs 110 and 120 of the present disclosure may serve as the AP and/or the non-AP. In the present disclosure, the AP may be indicated as an AP STA.

The STAs 110 and 120 of the present disclosure may support various communication standards together in addition to the IEEE 802.11 standard. For example, a communication standard (e.g., LTE, LTE-A, 5G NR standard) or the like based on the 3GPP standard may be supported. In addition, the STA of the present disclosure may be implemented as various devices such as a mobile phone, a vehicle, a personal computer, or the like. In addition, the STA of the present disclosure may support communication for various communication services such as voice calls, video calls, data communication, and self-driving (autonomous-driving), or the like.

The STAs 110 and 120 of the present disclosure may include a medium access control (MAC) conforming to the IEEE 802.11 standard and a physical layer interface for a radio medium.

The STAs 110 and 120 will be described below with reference to a sub-figure (a) of FIG. 1.

The first STA 110 may include a processor 111, a memory 112, and a transceiver 113. The illustrated process, memory, and transceiver may be implemented individually as separate chips, or at least two blocks/functions may be implemented through a single chip.

The transceiver 113 of the first STA performs a signal transmission/reception operation. Specifically, an IEEE 802.11 packet (e.g., IEEE 802.11a/b/g/n/ac/ax/be, etc.) may be transmitted/received.

For example, the first STA 110 may perform an operation intended by an AP. For example, the processor 111 of the AP may receive a signal through the transceiver 113, process a reception (RX) signal, generate a transmission (TX) signal, and provide control for signal transmission. The memory 112 of the AP may store a signal (e.g., RX signal) received through the transceiver 113, and may store a signal (e.g., TX signal) to be transmitted through the transceiver.

For example, the second STA 120 may perform an operation intended by a non-AP STA. For example, a transceiver 123 of a non-AP performs a signal transmission/reception operation. Specifically, an IEEE 802.11 packet (e.g., IEEE 802.11a/b/g/n/ac/ax/be packet, etc.) may be transmitted/received.

For example, a processor 121 of the non-AP STA may receive a signal through the transceiver 123, process an RX signal, generate a TX signal, and provide control for signal transmission. A memory 122 of the non-AP STA may store a signal (e.g., RX signal) received through the transceiver 123, and may store a signal (e.g., TX signal) to be transmitted through the transceiver.

For example, an operation of a device indicated as an AP in the disclosure described below may be performed in the first STA 110 or the second STA 120. For example, if the first STA 110 is the AP, the operation of the device indicated as the AP may be controlled by the processor 111 of the first STA 110, and a related signal may be transmitted or received through the transceiver 113 controlled by the processor 111 of the first STA 110. In addition, control information related to the operation of the AP or a TX/RX signal of the AP may be stored in the memory 112 of the first STA 110. In addition, if the second STA 120 is the AP, the operation of the device indicated as the AP may be controlled by the processor 121 of the second STA 120, and a related signal may be transmitted or received through the transceiver 123 controlled by the processor 121 of the second STA 120. In addition, control information related to the operation of the AP or a TX/RX signal of the AP may be stored in the memory 122 of the second STA 120.

For example, in the disclosure described below, an operation of a device indicated as a non-AP (or user-STA) may be performed in the first STA 110 or the second STA 120. For example, if the second STA 120 is the non-AP, the operation of the device indicated as the non-AP may be controlled by the processor 121 of the second STA 120, and a related signal may be transmitted or received through the transceiver 123 controlled by the processor 121 of the second STA 120. In addition, control information related to the operation of the non-AP or a TX/RX signal of the non-AP may be stored in the memory 122 of the second STA 120. For example, if the first STA 110 is the non-AP, the operation of the device indicated as the non-AP may be controlled by the processor 111 of the first STA 110, and a related signal may be transmitted or received through the transceiver 113 controlled by the processor 111 of the first STA 110. In addition, control information related to the operation of the non-AP or a TX/RX signal of the non-AP may be stored in the memory 112 of the first STA 110.

In the disclosure described below, a device called a (transmitting/receiving) STA, a first STA, a second STA, an STA1, an STA2, an AP, a first AP, a second AP, an AP1, an AP2, a (transmitting/receiving) terminal, a (transmitting/receiving) device, a (transmitting/receiving) apparatus, a network, or the like may imply the STAs 110 and 120 of FIG. 1. For example, a device indicated as, without a specific reference numeral, the (transmitting/receiving) STA, the first STA, the second STA, the STA1, the STA2, the AP, the first AP, the second AP, the AP1, the AP2, the (transmitting/receiving) terminal, the (transmitting/receiving) device, the (transmitting/receiving) apparatus, the network, or the like may imply the STAs 110 and 120 of FIG. 1. For example, in the following example, an operation in which various STAs transmit/receive a signal (e.g., a PPDU) may be performed in the transceivers 113 and 123 of FIG. 1. In addition, in the following example, an operation in which various STAs generate a TX/RX signal or perform data processing and computation in advance for the TX/RX signal may be performed in the processors 111 and 121 of FIG. 1. For example, an example of an operation for generating the TX/RX signal or performing the data processing and computation in advance may include: 1) an operation of determining/obtaining/configuring/computing/decoding/encoding bit information of a sub-field (SIG, STF, LTF, Data) included in a PPDU; 2) an operation of determining/configuring/obtaining a time resource or frequency resource (e.g., a subcarrier resource) or the like used for the sub-field (SIG, STF, LTF, Data) included the PPDU; 3) an operation of determining/configuring/obtaining a specific sequence (e.g., a pilot sequence, an STF/LTF sequence, an extra sequence applied to SIG) or the like used for the sub-field (SIG, STF, LTF, Data) field included in the PPDU; 4) a power control operation and/or power saving operation applied for the STA; and 5) an operation related to determining/obtaining/configuring/decoding/encoding or the like of an ACK signal. In addition, in the following example, a variety of information used by various STAs for determining/obtaining/configuring/computing/decoding/decoding a TX/RX signal (e.g., information related to a field/subfield/control field/parameter/power or the like) may be stored in the memories 112 and 122 of FIG. 1.

The aforementioned device/STA of the sub-figure (a) of FIG. 1 may be modified as shown in the sub-figure (b) of FIG. 1. Hereinafter, the STAs 110 and 120 of the present disclosure will be described based on the sub-figure (b) of FIG. 1.

For example, the transceivers 113 and 123 illustrated in the sub-figure (b) of FIG. 1 may perform the same function as the aforementioned transceiver illustrated in the sub-figure (a) of FIG. 1. For example, processing chips 114 and 124 illustrated in the sub-figure (b) of FIG. 1 may include the processors 111 and 121 and the memories 112 and 122. The processors 111 and 121 and memories 112 and 122 illustrated in the sub-figure (b) of FIG. 1 may perform the same function as the aforementioned processors 111 and 121 and memories 112 and 122 illustrated in the sub-figure (a) of FIG. 1.

A mobile terminal, a wireless device, a wireless transmit/receive unit (WTRU), a user equipment (UE), a mobile station (MS), a mobile subscriber unit, a user, a user STA, a network, a base station, a Node-B, an access point (AP), a repeater, a router, a relay, a receiving unit, a transmitting unit, a receiving STA, a transmitting STA, a receiving device, a transmitting device, a receiving apparatus, and/or a transmitting apparatus, which are described below, may imply the STAs 110 and 120 illustrated in the sub-figure (a)/(b) of FIG. 1, or may imply the processing chips 114 and 124 illustrated in the sub-figure (b) of FIG. 1. That is, a technical feature of the present disclosure may be performed in the STAs 110 and 120 illustrated in the sub-figure (a)/(b) of FIG. 1, or may be performed only in the processing chips 114 and 124 illustrated in the sub-figure (b) of FIG. 1. For example, a technical feature in which the transmitting STA transmits a control signal may be understood as a technical feature in which a control signal generated in the processors 111 and 121 illustrated in the sub-figure (a)/(b) of FIG. 1 is transmitted through the transceivers 113 and 123 illustrated in the sub-figure (a)/(b) of FIG. 1. Alternatively, the technical feature in which the transmitting STA transmits the control signal may be understood as a technical feature in which the control signal to be transferred to the transceivers 113 and 123 is generated in the processing chips 114 and 124 illustrated in the sub-figure (b) of FIG. 1.

For example, a technical feature in which the receiving STA receives the control signal may be understood as a technical feature in which the control signal is received by means of the transceivers 113 and 123 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (a) of FIG. 1 is obtained by the processors 111 and 121 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (b) of FIG. 1 is obtained by the processing chips 114 and 124 illustrated in the sub-figure (b) of FIG. 1.

Referring to the sub-figure (b) of FIG. 1, software codes 115 and 125 may be included in the memories 112 and 122. The software codes 115 and 126 may include instructions for controlling an operation of the processors 111 and 121. The software codes 115 and 125 may be included as various programming languages.

The processors 111 and 121 or processing chips 114 and 124 of FIG. 1 may include an application-specific integrated circuit (ASIC), other chipsets, a logic circuit and/or a data processing device. The processor may be an application processor (AP). For example, the processors 111 and 121 or processing chips 114 and 124 of FIG. 1 may include at least one of a digital signal processor (DSP), a central processing unit (CPU), a graphics processing unit (GPU), and a modulator and demodulator (modem). For example, the processors 111 and 121 or processing chips 114 and 124 of FIG. 1 may be SNAPDRAGONTM series of processors made by Qualcomm^{®}, EXYNOSTM series of processors made by Samsung^{®}, A series of processors made by Apple^{®}, HELIOTM series of processors made by MediaTek^{®}, ATOMTM series of processors made by Intel^{®} or processors enhanced from these processors.

In the present disclosure, an uplink may imply a link for communication from a non-AP STA to an AP STA, and an uplink PPDU/packet/signal or the like may be transmitted through the uplink. In addition, in the present disclosure, a downlink may imply a link for communication from the AP STA to the non-AP STA, and a downlink PPDU/packet/signal or the like may be transmitted through the downlink.

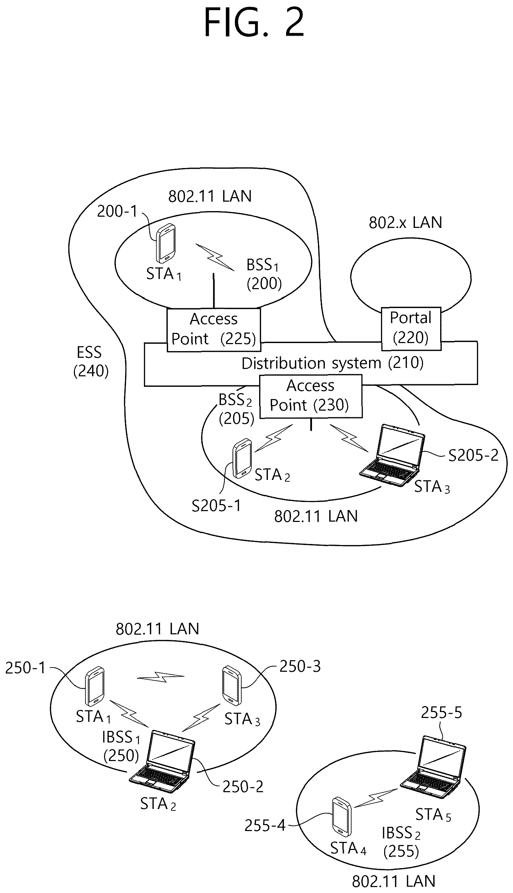

FIG. 2 is a conceptual view illustrating the structure of a wireless local area network (WLAN).

An upper part of FIG. 2 illustrates the structure of an infrastructure basic service set (BSS) of institute of electrical and electronic engineers (IEEE) 802.11.

An upper part of FIG. 2 illustrates the structure of an infrastructure basic service set (BSS) of institute of electrical and electronic engineers (IEEE) 802.11.

Referring the upper part of FIG. 2, the wireless LAN system may include one or more infrastructure BSSs 200 and 205 (hereinafter, referred to as BSS). The BSSs 200 and 205 as a set of an AP and an STA such as an access point (AP) 225 and a station (STA1) 200-1 which are successfully synchronized to communicate with each other are not concepts indicating a specific region. The BSS 205 may include one or more STAs 205-1 and 205-2 which may be joined to one AP 230.

The BSS may include at least one STA, an AP 225, 230 providing a distribution service, and a distribution system (DS) 210 connecting multiple APs.

The distribution system 210 may implement an extended service set (ESS) 240 extended by connecting the multiple BSSs 200 and 205. The ESS 240 may be used as a term indicating one network configured by connecting one or more APs 225 or 230 through the distribution system 210. The AP included in one ESS 240 may have the same service set identification (SSID).

A portal 220 may serve as a bridge which connects the wireless LAN network (IEEE 802.11) and another network (e.g., 802.X).

In the BSS illustrated in the upper part of FIG. 2, a network between the APs 225 and 230 and a network between the APs 225 and 230 and the STAs 200-1, 205-1, and 205-2 may be implemented. However, the network is configured even between the STAs without the APs 225 and 230 to perform communication. A network in which the communication is performed by configuring the network even between the STAs without the APs 225 and 230 is defined as an Ad-Hoc network or an independent basic service set (IBSS).

A lower part of FIG. 2 illustrates a conceptual view illustrating the IBSS.

Referring to the lower part of FIG. 2, the IBSS is a BSS that operates in an Ad-Hoc mode. Since the IBSS does not include the access point (AP), a centralized management entity that performs a management function at the center does not exist. That is, in the IBSS, STAs 250-1, 250-2, 250-3, 255-4, and 255-5 are managed by a distributed manner. In the IBSS, all STAs 250-1, 250-2, 250-3, 255-4, and 255-5 may be constituted by movable STAs and are not permitted to access the DS to constitute a self-contained network.

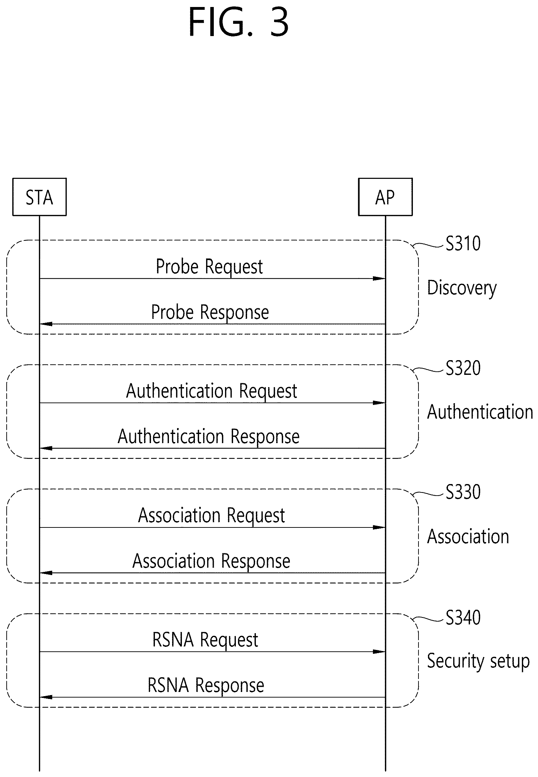

FIG. 3 illustrates a general link setup process.

In S310, a STA may perform a network discovery operation. The network discovery operation may include a scanning operation of the STA. That is, to access a network, the STA needs to discover a participating network. The STA needs to identify a compatible network before participating in a wireless network, and a process of identifying a network present in a particular area is referred to as scanning. Scanning methods include active scanning and passive scanning.

FIG. 3 illustrates a network discovery operation including an active scanning process. In active scanning, a STA performing scanning transmits a probe request frame and waits for a response to the probe request frame in order to identify which AP is present around while moving to channels. A responder transmits a probe response frame as a response to the probe request frame to the STA having transmitted the probe request frame. Here, the responder may be a STA that transmits the last beacon frame in a BSS of a channel being scanned. In the BSS, since an AP transmits a beacon frame, the AP is the responder. In an IBSS, since STAs in the IBSS transmit a beacon frame in turns, the responder is not fixed. For example, when the STA transmits a probe request frame via channel 1 and receives a probe response frame via channel 1, the STA may store BSS-related information included in the received probe response frame, may move to the next channel (e.g., channel 2), and may perform scanning (e.g., transmits a probe request and receives a probe response via channel 2) by the same method.

Although not shown in FIG. 3, scanning may be performed by a passive scanning method. In passive scanning, a STA performing scanning may wait for a beacon frame while moving to channels. A beacon frame is one of management frames in IEEE 802.11 and is periodically transmitted to indicate the presence of a wireless network and to enable the STA performing scanning to find the wireless network and to participate in the wireless network. In a BSS, an AP serves to periodically transmit a beacon frame. In an IBSS, STAs in the IBSS transmit a beacon frame in turns. Upon receiving the beacon frame, the STA performing scanning stores information about a BSS included in the beacon frame and records beacon frame information in each channel while moving to another channel. The STA having received the beacon frame may store BSS-related information included in the received beacon frame, may move to the next channel, and may perform scanning in the next channel by the same method.

After discovering the network, the STA may perform an authentication process in S320. The authentication process may be referred to as a first authentication process to be clearly distinguished from the following security setup operation in S340. The authentication process in S320 may include a process in which the STA transmits an authentication request frame to the AP and the AP transmits an authentication response frame to the STA in response. The authentication frames used for an authentication request/response are management frames.

The authentication frames may include information about an authentication algorithm number, an authentication transaction sequence number, a status code, a challenge text, a robust security network (RSN), and a finite cyclic group.

The STA may transmit the authentication request frame to the AP. The AP may determine whether to allow the authentication of the STA based on the information included in the received authentication request frame. The AP may provide the authentication processing result to the STA via the authentication response frame.

When the STA is successfully authenticated, the STA may perform an association process in S330. The association process includes a process in which the STA transmits an association request frame to the AP and the AP transmits an association response frame to the STA in response. The association request frame may include, for example, information about various capabilities, a beacon listen interval, a service set identifier (SSID), a supported rate, a supported channel, RSN, a mobility domain, a supported operating class, a traffic indication map (TIM) broadcast request, and an interworking service capability. The association response frame may include, for example, information about various capabilities, a status code, an association ID (AID), a supported rate, an enhanced distributed channel access (EDCA) parameter set, a received channel power indicator (RCPI), a received signal-to-noise indicator (RSNI), a mobility domain, a timeout interval (association comeback time), an overlapping BSS scanning parameter, a TIM broadcast response, and a QoS map.

In S340, the STA may perform a security setup process. The security setup process in S340 may include a process of setting up a private key through four-way handshaking, for example, through an extensible authentication protocol over LAN (EAPOL) frame.

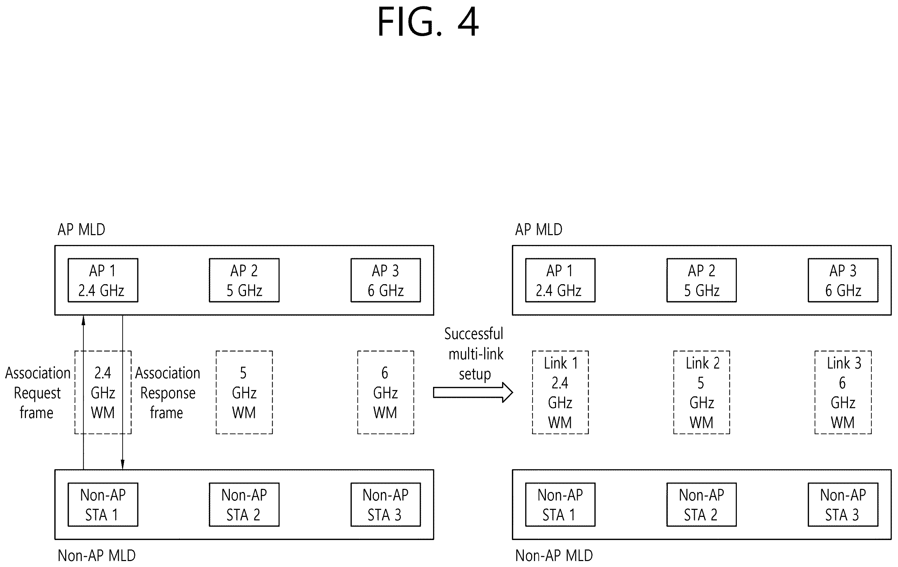

FIG. 4 shows an example of a multi-link (ML).

As illustrated in FIG. 4, multiple multi-link devices (MLDs) can perform communication via a remote link. The MLD can be classified into an AP MLD including multiple AP STAs and a non-AP MLD including multiple non-AP STAs. That is, the AP MLD can include affiliated APs (i.e., AP STAs), and the non-AP MLD can include affiliated STAs (i.e., non-AP STAs, or user-STAs).

The multi-link can include a first link and a second link, and different channels/subchannels/frequency resources can be allocated to the first and second links. The first and second multi-links can be identified through a link ID of 4 bits (or other n bits). The first and second links may be configured in the same 2.4 GHz, 5 GHz, or 6 GHz band. Alternatively, the first link and the second link may be configured in different bands.

The AP MLD of FIG. 4 includes three affiliated APs. In the example of FIG. 4, AP1 may operate in the 2.4 GHz band, AP2 may operate in the 5 GHz band, and AP3 may operate in the 6 GHz band. In the example of FIG. 4, the first link in which AP1 and non-AP1 operate may be defined as a channel/subchannel/frequency resource within the 2.4 GHz band. In addition, in the example of FIG. 4, the second link in which AP2 and non-AP2 operate may be defined as a channel/subchannel/frequency resource within the 5 GHz band. In addition, in the example of FIG. 4, the third link where AP3 and non-AP3 operate can be defined as a channel/subchannel/frequency resource within the 6 GHz band.

In the example of FIG. 4, AP1 can start a multi-link setup procedure (ML setup procedure) by transmitting an association request frame to non-AP STE1. In the example of FIG. 4, non-AP STA1 can transmit an association response frame in response to the association request frame. Each AP (e.g., AP1/2/3) illustrated in FIG. 4 may be identical to the AP illustrated in FIG. 1 and/or FIG. 2, and each non-AP (e.g., non-AP1/2/3) illustrated in FIG. 4 may be identical to the STA (i.e., user-STA or non-AP STA) illustrated in FIG. 1 and/or FIG. 2.

The specific features of the present disclosure are not limited to the specific features of FIG. 4. That is, the number of links can be defined in various ways, and multiple links can be defined in various ways within at least one band.

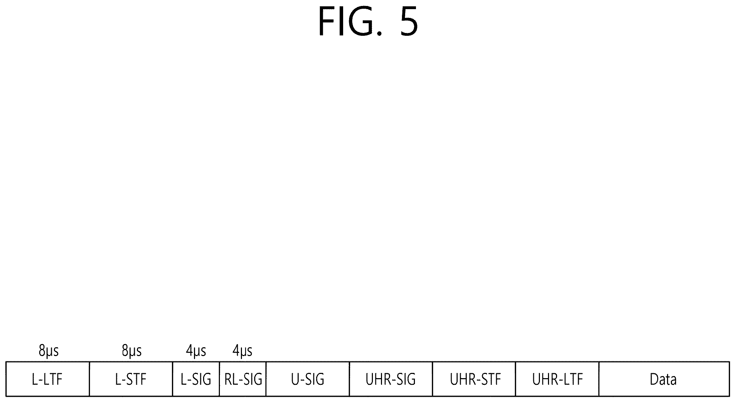

FIG. 5 shows an example of a physical protocol data unit or physical layer (PHY) protocol data unit (PPDU) transmitted/received by an STA of the present disclosure.

An STA (e.g., an AP STA, a non-AP STA, an AP MLD, a non-AP MLD) of the present disclosure can transmit and/or receive a PPDU of FIG. 5. The PPDU described in the present disclosure can have, for example, a structure of FIG. 5. In addition, the PPDU described in the present disclosure can be called by various names such as a transmission PPDU, a reception PPDU, a first type or an N^{th} type PPDU, etc. The PPDU described in the present disclosure can be used in a WLAN system defined according to IEEE 802.11bn and/or a next-generation WLAN system that improves IEEE 802.11bn.

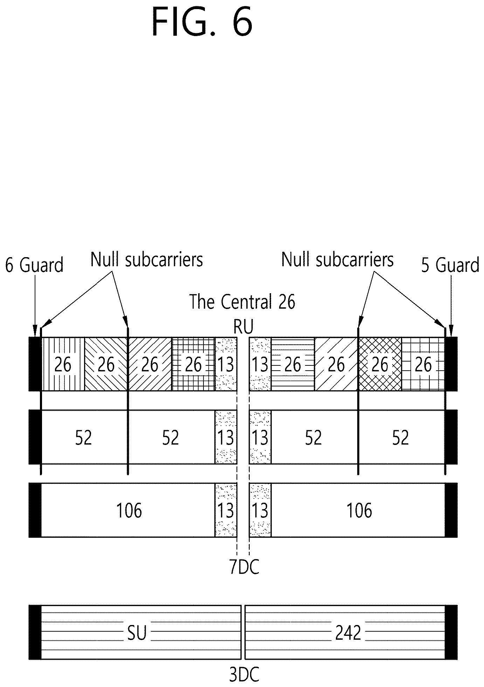

The PPDU of FIG. 5 can be related to various PPDU types used in a UHR system. For example, the example of FIG. 5 can be used for at least one of single-user (SU) mode/type/transmission, multi-user (MU) mode/type/transmission, and null-data packet (NDP) mode/type/transmission related to channel sounding. For example, if the example of FIG. 5 is related to NDP, the data field illustrated can be omitted. If the PPDU of FIG. 5 is used for trigger-based (TB) mode, UHR-SIG of FIG. 6 can be omitted. In other words, an STA that has received a trigger frame for uplink-MU (UL-MU) communication can transmit a PPDU with UHR-SIG omitted in the example of FIG. 5.

In FIG. 5, L-STF or UHR-LTF may be called a preamble or a physical preamble, and may be generated/transmitted/received/acquired/decoded in the physical layer (included in the transmitting/receiving STA).

Each block illustrated in FIG. 5 may be called a field/subfield/signal, etc. The names of these fields/subfields/signals may be legacy short training field (L-STF), legacy long training field (L-LTF), legacy signal (L-SIG), repeated L-SIG (RL-SIG), universal signal (U-SIG), UHR-signal (UHR-SIG), etc., as illustrated in FIG. 5.

A subcarrier spacing of the L-STF, L-LTF, L-SIG, RL-SIG, U-SIG, and UHR-SIG fields of FIG. 5 may be determined as 312.5 kHz, and a subcarrier spacing of the UHR-STF, UHR-LTF, and Data fields may be determined as 78.125 kHz. That is, a tone index (or subcarrier index) of the L-STF, L-LTF, L-SIG, RL-SIG, U-SIG, and UHR -SIG fields may be expressed in unit of 312.5 kHz, and a tone index (or subcarrier index) of the UHR-STF, UHR-LTF, and Data fields may be expressed in unit of 78.125 kHz.

In the PPDU of FIG. 5, the L-LTF and the L-STF may be the same as those in the conventional fields (for example, non-HT LTF and non-HT STF defined in conventional WLAN standards).

The L-SIG field of FIG. 5 may include, for example, bit information of 24 bits. For example, the 24-bit information may include a rate field of 4 bits, a reserved bit of 1 bit, a length field of 12 bits, a parity bit of 1 bit, and a tail bit of 6 bits. For example, the length field of 12 bits may include information related to a length or time duration of a PPDU. For example, the length field of 12 bits may be determined based on a type of the PPDU. For example, when the PPDU is a non-high throughput (HT), high throughput (HT), very high throughput (VHT) PPDU, extremely high throughput (EHT) PPDU or UHR PPDU, a value of the length field may be determined as a multiple of 3. For example, when the PPDU is an HE PPDU, the value of the length field may be determined as "a multiple of 3"+1 or "a multiple of 3"+2. In other words, for the non-HT, HT, VHT PPDI, EHT PPDU or the UHR PPDU, the value of the length field may be determined as a multiple of 3, and for the high efficiency (HE) PPDU, the value of the length field may be determined as "a multiple of 3"+1 or "a multiple of 3"+2. In other words, the LENGTH field in an UHR PPDU is set to a value satisfying the condition that the remainder is zero when LENGTH is divided by 3

For example, the (non-AP and AP) STA may apply BCC encoding based on a 1/2 coding rate to the 24-bit information of the L-SIG field. Thereafter, the transmitting STA may obtain a BCC coding bit of 48 bits. BPSK modulation may be applied to the 48-bit coding bit, thereby generating 48 BPSK symbols. The transmitting STA may map the 48 BPSK symbols to positions except for a pilot subcarrier{subcarrier index -21, -7, +7, +21} and a DC subcarrier{subcarrier index 0}. As a result, the 48 BPSK symbols may be mapped to subcarrier indices -26 to -22, -20 to -8, -6 to -1, +1 to +6, +8 to +20, and +22 to +26. The transmitting STA may additionally map a signal of {-1, -1, -1, 1} to a subcarrier index {-28, -27, +27, +28}. The aforementioned signal may be used for channel estimation in the frequency domain corresponding to {-28, -27, +27, +28}.

For example, the (non-AP and AP) STA may generate an RL-SIG generated in the same manner as the L-SIG. BPSK modulation may be applied to the RL-SIG. The (non-AP and AP) STA may know that the RX PPDU is the HE PPDU, EHT PPDU, or the UHR PPDU, based on the presence of the RL-SIG. In other words, a receiving (non-AP and AP) STA can know that a received PPDU is one of a HE PPDU, an EHT PPDU, and a UHR PPDU if RL-SIG is present. In other words, a receiving (non-AP and AP) STA can know that a received PPDU is one of a non-HT PPDU, an HT PPDU, and a VHT PPDU if RL-SIG is not present. In other words, the RL-SIG field is a repeat of the L-SIG field and is used to differentiate a UHR PPDU from a non-HT PPDU, HT PPDU, and VHT PPDU.

A universal SIG (U-SIG) may be inserted after the RL-SIG of FIG. 6. The U-SIG may be called in various terms such as a first SIG field, a first SIG, a first type SIG, a control signal, a control signal field, a first (type) control signal, common control field, common control signal, or the like.

The U-SIG may include information of N bits, and may include information for identifying a type of the EHT PPDU. For example, the U-SIG may be configured based on two symbols (e.g., two contiguous OFDM symbols). Each symbol (e.g., OFDM symbol) for the U-SIG may have a duration of 4us. Each symbol of the U-SIG may be used to transmit the 26-bit information. For example, each symbol of the U-SIG may be transmitted/received based on 52 data tomes and 4 pilot tones.

Through the U-SIG for example, A-bit information (e.g., 52 un-coded bits) may be transmitted. A first symbol of the U-SIG may transmit first X-bit information (e.g., 26 un-coded bits) of the A-bit information, and a second symbol of the U-SIG may transmit the remaining Y-bit information (e.g. 26 un-coded bits) of the A-bit information. For example, the transmitting STA may obtain 26 un-coded bits included in each U-SIG symbol. The transmitting STA may perform convolutional encoding (i.e., BCC encoding) based on a rate of R=1/2 to generate 52-coded bits, and may perform interleaving on the 52-coded bits. The transmitting STA may perform BPSK modulation on the interleaved 52-coded bits to generate 52 BPSK symbols to be allocated to each U-SIG symbol. One U-SIG symbol may be transmitted based on 65 tones (subcarriers) from a subcarrier index -28 to a subcarrier index +28, except for a DC index 0. The 52 BPSK symbols generated by the transmitting STA may be transmitted based on the remaining tones (subcarriers) except for pilot tones, i.e., tones -21, -7, +7, +21.

For example, the A-bit information (e.g., 52 un-coded bits) generated by the U-SIG may include a CRC field (e.g., a field having a length of 4 bits) and a tail field (e.g., a field having a length of 6 bits). The CRC field and the tail field may be transmitted through the second symbol of the U-SIG. The CRC field may be generated based on 26 bits allocated to the first symbol of the U-SIG and the remaining 16 bits except for the CRC/tail fields in the second symbol, and may be generated based on the conventional CRC calculation algorithm. In addition, the tail field may be used to terminate trellis of a convolutional decoder, and may be set to, for example, '000000'.

The A-bit information (e.g., 52 un-coded bits) transmitted by the U-SIG (or U-SIG field) may be divided into version-independent bits and version-dependent bits. For example, the version-independent bits may have a fixed or variable size. For example, the version-independent bits may be allocated only to the first symbol of the U-SIG, or the version-independent bits may be allocated to both of the first and second symbols of the U-SIG. For example, the version-independent bits and the version-dependent bits may be called in various terms such as a first control bit, a second control bit, or the like.

For example, the version-independent bits of the U-SIG may include a PHY version identifier of 3 bits. For example, the PHY version identifier of 3 bits may include information related to a PHY version of a TX/RX PPDU. For example, a first value of the PHY version identifier of 3 bits (for example, 000 value) may indicate that the TX/RX PPDU is an EHT PPDU. Also, a second value of the PHY version identifier of 3 bits (for example, 001 value) may indicate that the TX/RX PPDU is a UHR PPDU.

In other words, when the (AP/non-AP) STA transmits an EHT PPDU, the 3-bit PHY version identifier can be set to the first value, and when the (AP/non-AP) STA transmits a UHR PPDU, the 3-bit PHY version identifier can be set to the second value. In other words, the receiving (AP/non-AP) STA can determine that the received PPDU is an EHT PPDU based on the PHY version identifier having the first value, and can determine that the received PPDU is a UHR PPDU based on the PHY version identifier having the second value.

For example, the version-independent bits of the U-SIG may include a UL/DL flag field of 1 bit. A first value of the UL/DL flag field of 1 bit relates to UL communication, and a second value of the UL/DL flag field relates to DL communication.

For example, the version-independent bits of the U-SIG may include information related to a transmission opportunity (TXOP) length and information related to a BSS color ID.

For example, if a UHR PPDU is classified into various types (e.g., type related to SU transmission (performed based on UL or DL), type related to DL transmission, type related to NDP transmission, type related to DL non-MU-MIMO, type related to DL MU-MIMO, type related to multi-AP operation, type related to coordinated beamforming (Co-BF), spatial reuse (SR), type related to coordinated OFDMA (C-OFDMA), type related to coordinated TDMA (Co-TDMA)), information about the type of the UHR PPDU (e.g., 2-bit or 3-bit information) can be included in the version-dependent bits of the U-SIG.

For example, the U-SIG may include: 1) a bandwidth field including information related to a bandwidth; 2) a field including information related to an modulation and coding scheme (MCS) applied to UHR-SIG; 3) an indication field including information regarding whether a dual subcarrier modulation (DCM) scheme is applied to UHR-SIG; 4) a field including information related to the number of symbol used for UHR-SIG; 5) a field including information regarding whether the UHR-SIG is generated across a full band; 6) a field including information related to a type of UHR-LTF/STF; and 7) information related to a field indicating an UHR-LTF length and a CP length.

Preamble puncturing may be applied to the PPDU of FIG. 5. The preamble puncturing implies that puncturing is applied to part (e.g., a secondary 20 MHz band) of the full band. For example, when an 80 MHz PPDU is transmitted, an STA may apply puncturing to the secondary 20 MHz band out of the 80 MHz band, and may transmit a PPDU only through a primary 20 MHz band and a secondary 40 MHz band.

For example, a pattern of the preamble puncturing may be configured in advance. For example, when a first puncturing pattern is applied, puncturing may be applied only to the secondary 20 MHz band within the 80 MHz band. For example, when a second puncturing pattern is applied, puncturing may be applied to only any one of two secondary 20 MHz bands included in the secondary 40 MHz band within the 80 MHz band. For example, when a third puncturing pattern is applied, puncturing may be applied to only the secondary 20 MHz band included in the primary 80 MHz band within the 160 MHz band (or 80+80 MHz band). For example, when a fourth puncturing is applied, puncturing may be applied to at least one 20 MHz channel not belonging to a primary 40 MHz band in the presence of the primary 40 MHz band included in the 80MHaz band within the 160 MHz band (or 80+80 MHz band).

Information related to the preamble puncturing applied to the PPDU may be included in U-SIG and/or UHR-SIG. For example, a first field of the U-SIG may include information related to a contiguous bandwidth, and second field of the U-SIG may include information related to the preamble puncturing applied to the PPDU.

For example, the U-SIG and the UHR-SIG may include the information related to the preamble puncturing, based on the following method. When a bandwidth of the PPDU exceeds 80 MHz, the U-SIG may be configured individually in unit of 80 MHz. For example, when the bandwidth of the PPDU is 160 MHz, the PPDU may include a first U-SIG for a first 80 MHz band and a second U-SIG for a second 80 MHz band. In this case, a first field of the first U-SIG may include information related to a 160 MHz bandwidth, and a second field of the first U-SIG may include information related to a preamble puncturing (i.e., information related to a preamble puncturing pattern) applied to the first 80 MHz band. In addition, a first field of the second U-SIG may include information related to a 160 MHz bandwidth, and a second field of the second U-SIG may include information related to a preamble puncturing (i.e., information related to a preamble puncturing pattern) applied to the second 80 MHz band. Meanwhile, an UHR-SIG contiguous to the first U-SIG may include information related to a preamble puncturing applied to the second 80 MHz band (i.e., information related to a preamble puncturing pattern), and an UHR-SIG contiguous to the second U-SIG may include information related to a preamble puncturing (i.e., information related to a preamble puncturing pattern) applied to the first 80 MHz band.

Additionally or alternatively, the U-SIG and the UHR-SIG may include the information related to the preamble puncturing, based on the following method. The U-SIG may include information related to a preamble puncturing (i.e., information related to a preamble puncturing pattern) for all bands. That is, the UHR-SIG may not include the information related to the preamble puncturing, and only the U-SIG may include the information related to the preamble puncturing (i.e., the information related to the preamble puncturing pattern).

The U-SIG may be configured in unit of 20 MHz. For example, when an 80 MHz PPDU is configured, the U-SIG may be duplicated. That is, four identical U-SIGs may be included in the 80 MHz PPDU. PPDUs exceeding an 80 MHz bandwidth may include different U-SIGs.

The UHR-SIG of FIG. 5 may include control information for the receiving STA. The UHR-SIG may be transmitted through at least one symbol, and one symbol may have a length of 4us. Information related to the number of symbols used for the UHR-SIG may be included in the U-SIG.

UHR-SIG provides an additional signal to the U-SIG field to enable STA to interpret/decode UHR PPDU. UHR-SIG field may include U-SIG overflow bits that are commonly applied to all users. In addition, UHR-SIG field includes resource allocation information, so that STA can look-up resources used in fields including data field/UHR-STF/UHR-LTF (i.e., UHR modulated fields of a UHR PPDU).

Frequency resources of UHR-LTF, UHR-STF, and data fields illustrated in FIG. 5 may be determined based on RUs (resource units) defined by multiple subcarriers/tones. That is, UHR-LTF, UHR-STF, and data fields of the present disclosure may be transmitted/received through RUs (resource units) defined by multiple subcarriers/tones.

FIG. 6 is a diagram illustrating the layout of resource units (RUs) used for a 20 MHz PPDU. That is, the UHR-LTF, UHR-STF, and/or data fields included in the 20 MHz PPDU may be transmitted/received through at least one of the various RUs defined in FIG. 6.

As illustrated in the uppermost part of FIG. 6, a 26-unit (i.e., a unit corresponding to 26 tones) may be disposed. Six tones may be used for a guard band in the leftmost band of the 20 MHz band, and five tones may be used for a guard band in the rightmost band of the 20 MHz band. Further, seven DC tones may be inserted in a center band, that is, a DC band, and a 26-unit corresponding to 13 tones on each of the left and right sides of the DC band may be disposed. A 26-unit, a 52-unit, and a 106-unit may be allocated to other bands. Each unit may be allocated for a receiving STA, that is, a user.

Meanwhile, the layout of the RUs in FIG. 6 may be used not only for a multiple users (MUs) but also for a single user (SU), in which case one 242-unit may be used and three DC tones may be inserted as illustrated in the lowermost part of FIG. 6.

Although FIG. 6 proposes RUs having various sizes, that is, a 26-RU, a 52-RU, a 106-RU, and a 242-RU, specific sizes of RUs may be extended or increased. Therefore, the present embodiment is not limited to the specific size of each RU (i.e., the number of corresponding tones). In this specification, N-RU may be represented as N-tone RU, etc. For example, 26-RU may be represented as 26-tone RU.

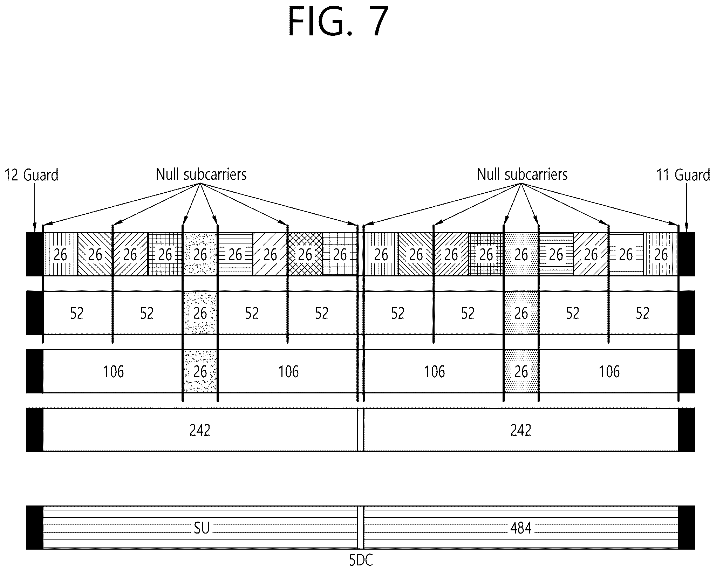

FIG. 7 is a diagram illustrating the layout of resource units (RUs) used for 40MHz PPDU.

Similarly to FIG. 6 in which RUs having various sizes are used, a 26-RU, a 52-RU, a 106-RU, a 242-RU, a 484-RU, and the like may be used in an example of FIG. 7. Further, five DC tones may be inserted in a center frequency, 12 tones may be used for a guard band in the leftmost band of the 40 MHz band, and 11 tones may be used for a guard band in the rightmost band of the 40 MHz band.

As illustrated in FIG. 7, when the layout of the RUs is used for a single user, a 484-RU may be used. The specific number of RUs may be changed similarly to FIG. 6.

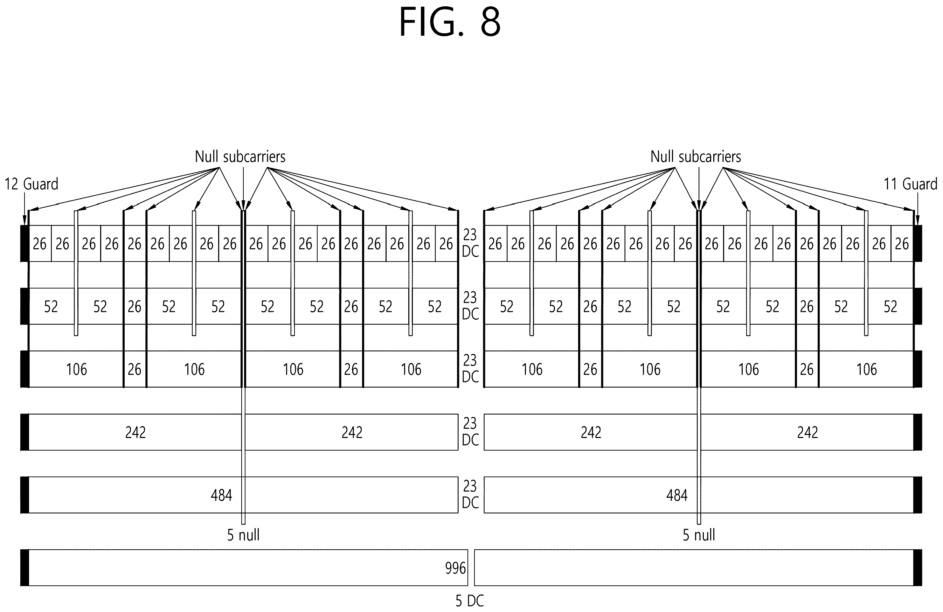

FIG. 8 is a diagram illustrating the layout of resource units (RUs) used for an 80MHz PPDU. The layout of resource units (RUs) used in this specification may vary. For example, the layout of resource units (RUs) used in the 80MHz band may vary.

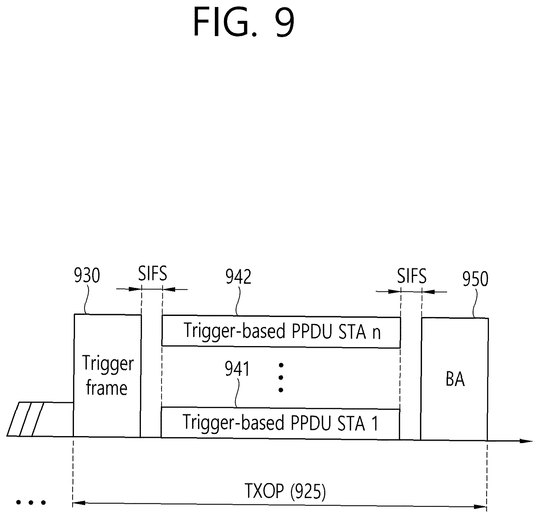

FIG. 9 shows an operation related to UL-MU. As illustrated, a transmitting STA (e.g., AP) can perform channel access through contending (i.e., backoff operation) and transmit a trigger frame (930). That is, the transmitting STA (e.g., AP) can transmit a PPDU including a trigger frame (930). When a PPDU including a trigger frame is received, a TB (trigger-based) PPDU is transmitted after a delay of SIFS.

TB PPDUs (941, 942) are transmitted at the same time and can be transmitted from multiple STAs (e.g., User STAs) whose AIDs are indicated in the Trigger frame (930). The ACK frame (950) for the TB PPDU can be implemented in various forms.

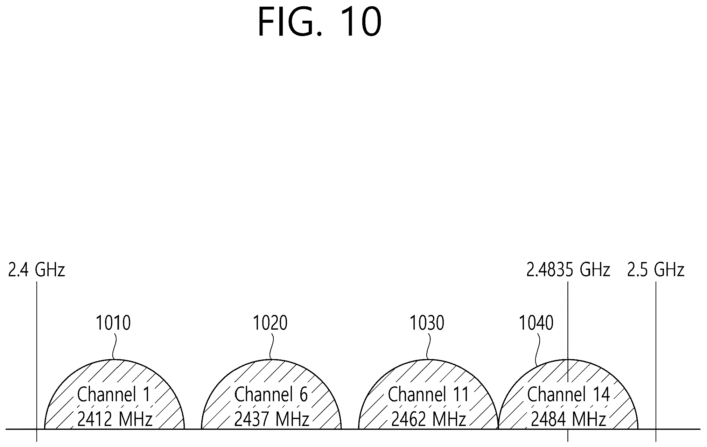

FIG. 10 illustrates an example of channels used/supported/defined within the 2.4 GHz band.

The 2.4 GHz band may also be referred to by other names, such as "first band." Furthermore, the 2.4 GHz band may refer to a frequency range in which channels with center frequencies adjacent to 2.4 GHz (e.g., channels with center frequencies between 2.4 and 2.5 GHz) are used/supported/defined.

The 2.4 GHz band may include multiple 20 MHz channels. The 20 MHz within the 2.4 GHz band may have multiple channel indices (e.g., indices 1 through 14). For example, the center frequency of a 20 MHz channel assigned channel index 1 may be 2.412 GHz, the center frequency of a 20 MHz channel assigned channel index 2 may be 2.417 GHz, and the center frequency of a 20 MHz channel assigned channel index N may be (2.407 + 0.005*N) GHz. The channel indices may be referred to by various names, such as channel numbers. The specific numerical values of the channel indices and center frequencies may change.

FIG. 10 exemplarily illustrates four channels within the 2.4 GHz band. The illustrated first frequency region (1010) to fourth frequency region (1040) may each include one channel. For example, the first frequency region (1010) may include channel 1 (a 20 MHz channel having an index of 1). In this case, the center frequency of channel 1 may be set to 2412 MHz. The second frequency region (1020) may include channel 6. In this case, the center frequency of channel 6 may be set to 2437 MHz. The third frequency region (1030) may include channel 11. In this case, the center frequency of channel 11 may be set to 2462 MHz. The fourth frequency region (1040) may include channel 14. In this case, the center frequency of channel 14 may be set to 2484 MHz.

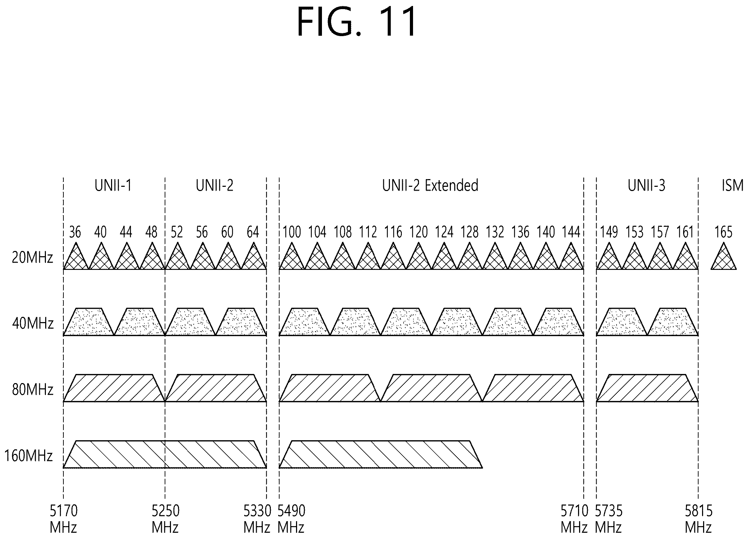

FIG. 11 illustrates an example of channels used/supported/defined within the 5 GHz band.

The 5 GHz band may be referred to by other names, such as a second band/band, etc. The 5 GHz band may refer to a frequency range in which channels with center frequencies greater than or equal to 5 GHz and less than 6 GHz (or less than 5.9 GHz) are used/supported/defined. Alternatively, the 5 GHz band may include multiple channels between 4.5 GHz and 5.5 GHz. The specific figures shown in FIG. 11 are subject to change.

Multiple channels within the 5 GHz band include Unlicensed National Information Infrastructure (UNII)-1, UNII-2, UNII-3, and ISM. UNII-1 may be referred to as UNII Low. UNII-2 may include frequency ranges called UNII Mid and UNII-2Extended. UNII-3 may be referred to as UNII-Upper.

Within the 5 GHz band, multiple channels can be configured, and the bandwidth of each channel can be variously configured, such as 20 MHz, 40 MHz, 80 MHz, or 160 MHz. For example, the 5170 MHz to 5330 MHz frequency domain/range within UNII-1 and UNII-2 can be divided into eight 20 MHz channels. The 5170 MHz to 5330 MHz frequency domain/range can be divided into four channels through a 40 MHz frequency domain. The 5170 MHz to 5330 MHz frequency domain/range can be divided into two channels through an 80 MHz frequency domain. Alternatively, the 5170 MHz to 5330 MHz frequency domain/range can be divided into one channel through a 160 MHz frequency domain.

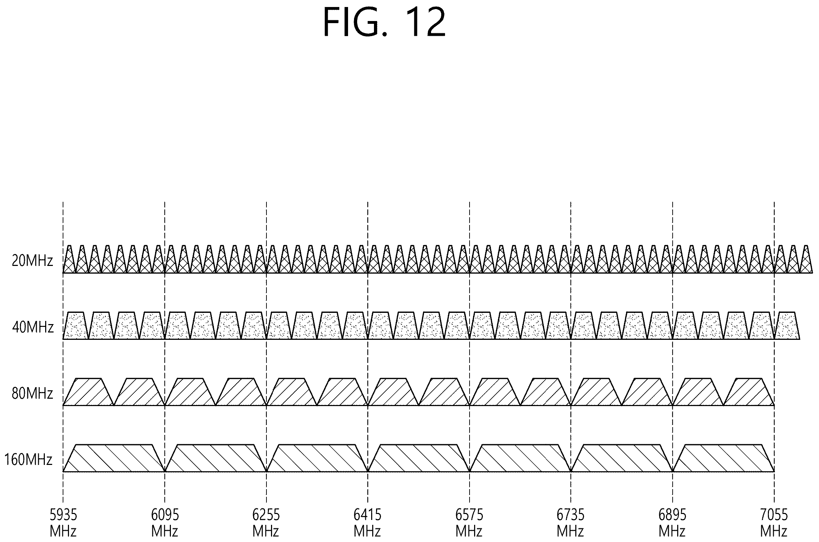

FIG. 12 illustrates an example of channels used/supported/defined within the 6 GHz band.

The 6 GHz band may be referred to by other names, such as the third band/band. The 6 GHz band may refer to a frequency range where channels with center frequencies higher than 5.9 GHz are used, supported, and defined. The specific values shown in FIG. 12 are subject to change.

For example, the 20 MHz channel in FIG. 12 may be defined starting from 5.940 GHz. Specifically, the leftmost channel among the 20 MHz channels in FIG. 12 may have an index of 1 (or channel index, channel number, etc.) and be assigned a center frequency of 5.945 GHz. In other words, the center frequency of channel index N may be determined as (5.940 + 0.005*N) GHz.

Accordingly, the indexes (or channel numbers) of the 20 MHz channels of FIG. 12 may be 1, 5, 9, 13, 17, 21, 25, 29, 33, 37, 41, 45, 49, 53, 57, 61, 65, 69, 73, 77, 81, 85, 89, 93, 97, 101, 105, 109, 113, 117, 121, 125, 129, 133, 137, 141, 145, 149, 153, 157, 161, 165, 169, 173, 177, 181, 185, 189, 193, 197, 201, 205, 209, 213, 217, 221, 225, 229, 233. Also, according to the (5.940 + 0.005*N) GHz rule mentioned above, the indexes of the 40 MHz channels in FIG. 12 may be 3, 11, 19, 27, 35, 43, 51, 59, 67, 75, 83, 91, 99, 107, 115, 123, 131, 139, 147, 155, 163, 171, 179, 187, 195, 203, 211, 219, 227.

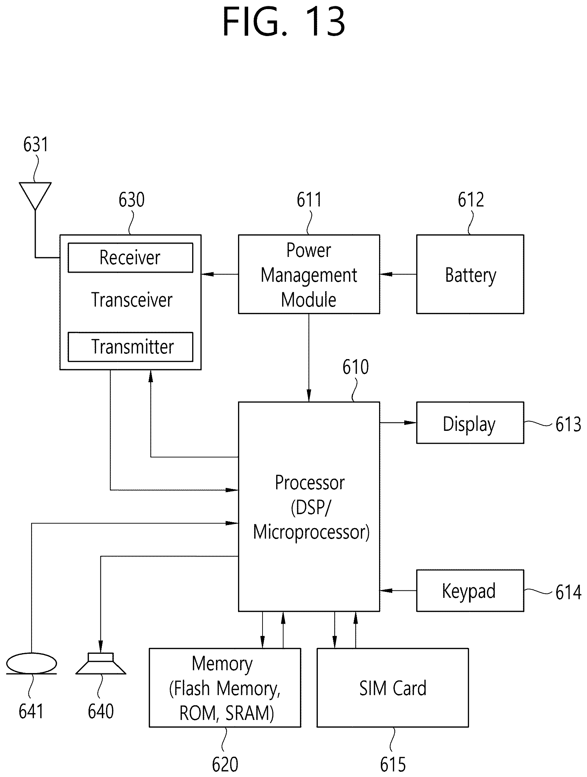

FIG. 13 shows a modified example of a transmitting device and/or a receiving device of the present disclosure.

The devices (e.g., AP STA, non-AP STA) shown in FIGS. 1 to 4 can be modified as shown in FIG. 13. The transceiver 630 of FIG. 13 can be identical to the transceiver 113, 123 of FIG. 1. The transceiver 630 of FIG. 13 can include a receiver and a transmitter.

The processor 610 of FIG. 13 can be identical to the processor 111, 121 of FIG. 1. Alternatively, the processor 610 of FIG. 13 can be identical to the processing chip 114, 124 of FIG. 1.

The memory 150 of FIG. 13 may be the same as the memory 112, 122 of FIG. 1. Alternatively, the memory 150 of FIG. 13 may be a separate external memory different from the memory 112, 122 of FIG. 1.

Referring to FIG. 13, the power management module 611 manages power for the processor 610 and/or the transceiver 630. The battery 612 supplies power to the power management module 611. The display 613 outputs the result processed by the processor 610. The keypad 614 receives input to be used by the processor 610. The keypad 614 may be displayed on the display 613. The SIM card 615 may be an integrated circuit used to securely store an international mobile subscriber identity (IMSI) and its associated keys, which are used to identify and authenticate subscribers in mobile devices such as mobile phones and computers.

Referring to FIG. 13, the speaker (640) may output sound-related results processed by the processor 610. The microphone (641) may receive sound-related input to be used by the processor 610.

Below, the Multi-AP operation applied to this specification is described.

The Multi-AP operation refers to a communication technique involving multiple APs in a WLAN. For example, the Multi-AP operation may refer to an operation in which one or more APs transmit and receive information to one or more STAs. In contrast to the Multi-AP operation, existing techniques may be expressed using various terms, such as STX (Single Transmission). For example, the STX operation may refer to a method in which one BSS AP communicates with one BSS STA. When communication is performed based on the STX operation, interference with adjacent APs (e.g., APs located in an overlapping BSS) may occur. This interference may result in reduced transmission and reception performance for cell-edge users (e.g., non-AP STAs located at the edge of the BSS).

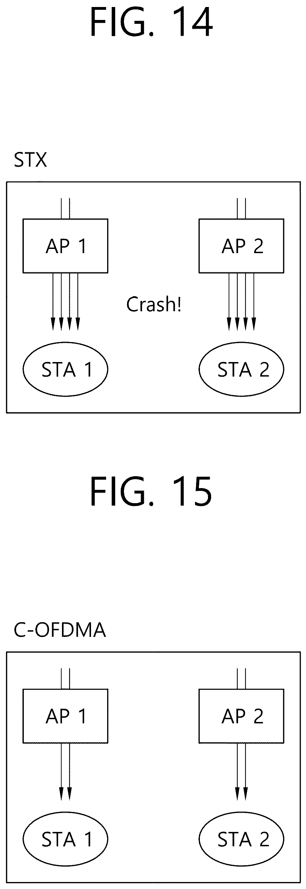

FIG. 14 illustrates operation according to a conventional STX operation. As shown, adjacent AP1 and AP2 can cause interference between STAs and APs.

To improve the STX operation, a new multi-AP operation is proposed. This multi-AP operation can be based on a technology that reduces various interferences, such as inter-symbol interference (ISI), through coordination with neighboring APs (e.g., APs located in an overlapping BSS).

In FIG. 14, STA1 and AP1 may be included in a BSS, and STA2 and AP2 may be included in an OBSS (Overlapping Basic Service Set). That is, STA2 may be an unassociated STA to AP1, and STA1 may be an unassociated STA to AP2.

For example, the Multi-AP operation can be classified into various technologies/types/formats/protocols, etc. For example, the Multi-AP operation can include Coordinated TDMA (C-TDMA) that distinguishes wireless resources allocated to multiple APs based on a time axis (time domain). Additionally or alternatively, the Multi-AP operation can include Coordinated OFDMA (C-OFDMA) that distinguishes wireless resources allocated to multiple APs based on a frequency axis (time domain). Additionally or alternatively, the Multi-AP operation can include Coordinated Spatial Reuse (C-SR) that applies Spatial Reuse (SR) to at least one AP. Additionally or alternatively, the Multi-AP operation can include Coordinated beamforming (CBF)/nulling that nulls and transmits interference generated from neighbors (e.g., adjacent APs/STAs, and/or OBSS APs/OBSS STAs). Additionally or alternatively, the Multi-AP operation may include AP selection in which an AP with a good channel condition among neighboring APs (e.g., at least one AP located within a BSS or OBSS and with a good channel condition) transmits. Additionally or alternatively, the Multi-AP operation may include Joint Transmission (JTX) or JT in which multiple APs (e.g., multiple APs included in the same BSS/OBSS, or multiple APs included in different BSS/OBSS) cooperate to perform simultaneous transmission and reception, and JTX/JT may be implemented based on Joint Beamforming or Joint MU-MIMO.

FIG. 15 illustrates an example of Coordinated OFDMA (C-OFDMA). The illustrated AP1 can transmit a PPDU/signal to STA1, and AP2 can transmit a PPDU/signal to STA2. The transmission from AP1 and the transmission from AP2 can be performed in the same/overlapping time interval. The transmission from AP1 to STE11 can be performed based on a first frequency band, and the transmission from AP2 to STA2 can be performed based on a second frequency band different from the second frequency band. For example, in FIG. 15, STA1 and AP1 can be included in a BSS, and STA2 and AP2 can be included in an OBSS. That is, STA2 can be an unassociated STA to AP1, and STA1 can be an unassociated STA to AP2.

Although not illustrated in FIG. 15, an example of Coordinated TDMA (C-TDMA) is also possible. For example, the acquired TXOP can be divided into specific time units (e.g., slots), and the divided slots can be sequentially assigned to multiple different APs.

The above-described C-OFDMA example can be further modified as follows. For example, an AP (e.g., AP1) that has acquired a TXOP can share frequency resources with at least one neighboring AP (e.g., AP2 in the BSS/OBSS). For example, shared frequency resources can be defined on a resource unit (RU) basis or a subchannel basis. For example, for flexibility, frequency resources can be shared from AP1 to AP2 in 20/40/80 MHz subchannels or 242/484/996-tone RU units.

AP1, performing C-OFDMA, can act as a sharing AP or a master AP. That is, AP1 can request at least one neighboring AP (e.g., AP2 in the BSS/OBSS) to report information about the channel and/or buffer status. Based on this, AP1 can obtain a TXOP and share a part of the frequency resource (e.g., a 20 MHz subchannel or a RU of a certain size) with at least one AP in the vicinity (e.g., AP2 existing in the BSS/OBSS) within all or part of the time interval related to the TXOP.

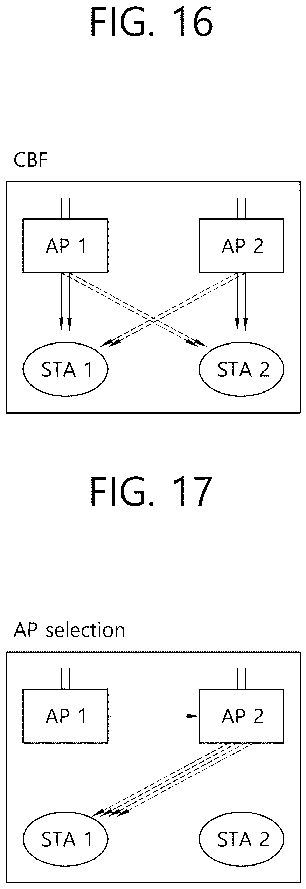

FIG. 16 illustrates an example of Coordinated Beamforming (CBF). The illustrated AP1 may transmit a PPDU/signal to STA1, and AP2 may transmit a PPDU/signal to STA2. The transmission from AP1 and the transmission from AP2 may be performed in the same/overlapping time interval. The transmission from AP1 and the transmission from AP2 may be performed through the same/overlapping frequency band. In order to reduce interference caused to STA2 by AP1, AP1 may perform nulling/beamforming toward STA2, and in order to reduce interference caused to STA1 by AP2, AP2 may perform nulling/beamforming toward STA1. For example, such nulling/beamforming may be implemented in a manner of positioning a radiation null to a neighboring unassociated STA. The above-described nulling/beamforming may make a specific AP invisible to a neighboring unassociated STA. For example, the above-described nulling/beamforming may make AP1 (or AP2) invisible to STA2 (or STA1).

For example, in FIG. 16, STA1 and AP1 may be included in the BSS, while STA2 and AP2 may be included in the OBSS. In other words, STA2 may be an unassociated STA to AP1, and STA1 may be an unassociated STA to AP2.

Although not illustrated in FIG. 16, control signals (e.g., coordination frames) for nulling/beamforming between AP1 and STA2 and/or nulling/beamforming between AP2 and STA1 may be transmitted and received over the backhaul link between AP1 and AP2.

FIG. 17 illustrates an example of AP selection. The illustrated AP2 is judged to have a better channel condition than AP1. AP1 transmits its data/signal to AP2 via a backhaul link, and AP2 can transmit a signal to STA1 instead of AP1. For example, in FIG. 17, STA1 and AP1 may be included in a BSS, and STA2 and AP2 may be included in an OBSS. In other words, STA2 may be an unassociated STA to AP1, and STA1 may be an unassociated STA to AP2.

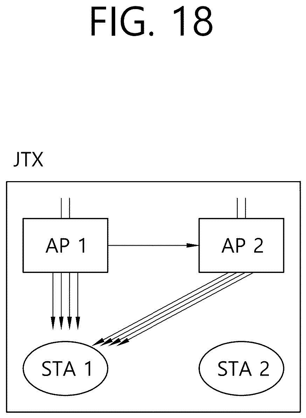

FIG. 18 illustrates an example of JTX/JT. The illustrated AP1 can transmit to STA1 together with AP2. For example, the PPDU/signal transmitted from AP2 to STA1 may be all or part of the same as the PPDU/signal transmitted from AP1 to STA1. For example, the PPDU/signal transmitted from AP2 to STA1 may be simultaneously transmitted through the same/overlapping frequency band as the PPDU/signal transmitted from AP1 to STA1. For example, the PPDU/signal transmitted from AP2 to STA1 may be a signal transmitted from AP1 through a backhaul link. For example, in FIG. 18, STA1 and AP1 may be included in a BSS, and STA2 and AP2 may be included in an OBSS. That is, STA2 may be an unassociated STA to AP1, and STA1 may be an unassociated STA to AP2.

More specifically, in FIG. 18, AP1 can transmit a coordination request (or can be named variously, such as a first request, a control request, etc.) to AP2 and receive a coordination response (or can be named variously, such as a first response, a control response, etc.) from AP2. Through the exchange of the request/response, information about coordination between AP1 and AP2 (e.g., information about whether AP1 and AP2 will perform simultaneous transmission to STA1), information about the point in time when coordination starts, information about the point in time when AP1 and AP2 start simultaneous transmission to STE1, information about data shared between AP1 and AP2, etc. can be exchanged. AP1 can share its data with AP2 via the backhaul link. Thereafter, AP1 can transmit a coordination trigger frame (or can be named variously, such as a trigger frame) to AP2 and perform simultaneous transmission to STA1 based on the trigger frame.

### <Embodiments applicable to this specification>

To enable terminals to maintain continuous WLAN connectivity over a wider area, numerous APs are being installed adjacent to each other. However, overlapping BSSs of multiple APs can lead to issues such as radio interference and transmission collisions between APs. To address these issues, various technologies have been proposed to coordinate APs across frequency, time, and spatial domains (e.g., RU selection, joint transmission, nulling, etc.). Furthermore, attention should be paid to the various issues that may arise during inter-AP coordination.

In EHT (802.11be), a technology was proposed to allocate some time within the TXOP acquired by the AP to support peer-to-peer (P2P) transmission to non-AP STAs. To this end, a new TXOP Sharing Mode subfield was defined in the Common Info field of the existing MU-RTS Trigger frame, and the MU-RTS (Multi User-Request To Send) Trigger frame when this value is nonzero is referred to as an MU-RTS TXOP Sharing (TXS) Trigger frame (TF). If the value of the TXOP Sharing mode is 1, the non-AP STA supports one or more (non-TB) PPDU transmissions to the AP, and if the value of the TXOP Sharing mode is 2, the non-AP STA supports P2P transmission in addition to (non-TB) PPDU transmissions to the AP.

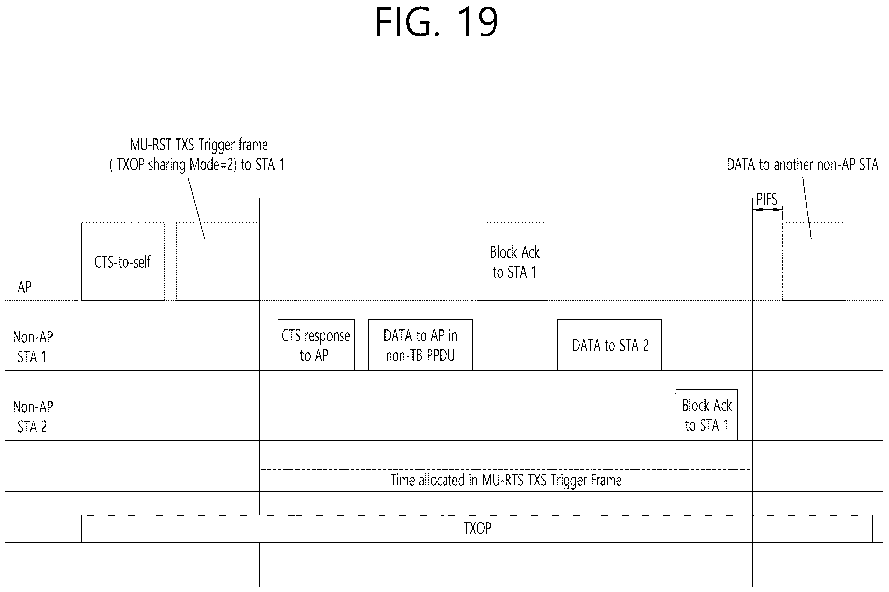

FIG. 19 illustrates an example of the operation of an MU-RTS TXS trigger frame in which the TXOP Sharing Mode subfield value is 2.

FIG. 19 shows an example of operation when the TXOP Sharing mode value is 2. When the AP transmits an MU-RTS TXS TF including time allocation information (Time allocated in MU-RTS TXS Trigger Frame of FIG. 19) to non-AP STA 1, non-AP STA 1 can perform P2P transmission to non-AP STA 2 after responding with Clear-To-Send (CTS).

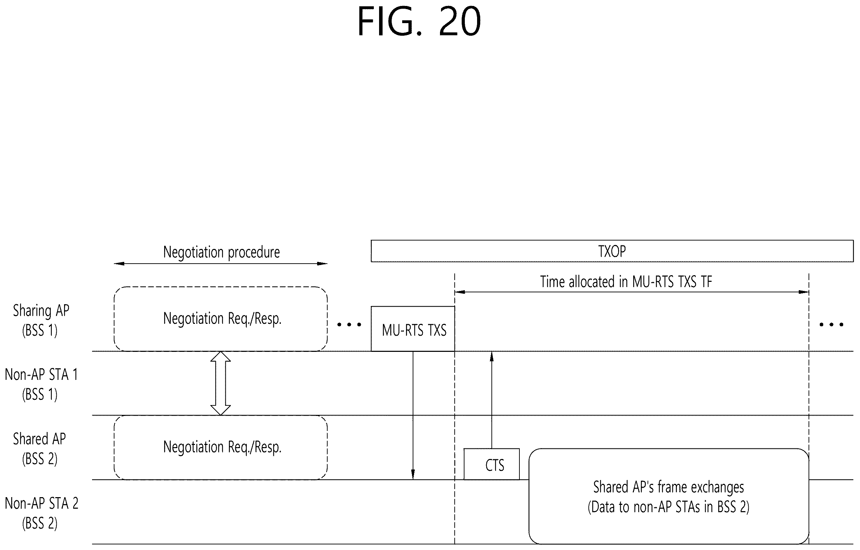

FIG. 20 illustrates an example of coordinated TDMA operation, including a negotiation process.

Meanwhile, if the existing Triggered TXOP Sharing protocol is utilized for multi-AP coordination, frame exchange can be performed without affecting each other by dividing the transmission within the BSS of each coordination AP by time unit. That is, FIG. 20 shows an example of Coordinated-Time Division Multiplexing Access (Co-TDMA) according to the time unit among the coordination methods between coordination APs. At this time, the AP in the existing Triggered TXS protocol can play the role of an AP that shares TXOP in the multi-AP coordination operation, and the STA in the existing Triggered TXS protocol can play the role of an AP that shares TXOP in the multi-AP coordination operation. In this specification, an AP that shares TXOP is referred to as a Sharing AP (SAP), and an AP that receives TXOP from an SAP is referred to as a Shared AP (DAP). Here, the SAP that shares TXOP is not limited to only AP STAs, and may also include non-AP STAs that share TXOP. In addition, the DAP that shares TXOP is not limited to only AP STAs, and may also include non-AP STAs that share TXOP (or transmit and receive with AP STAs that share TXOP). In addition, the frame exchange with non-AP STAs or SAPs belonging to the DAP BSS during the time allocated to the DAP is referred to as the BSS frame exchange (FE) of the DAP. For example, the frame exchange may include data frame transmission and block ACK frame response following RTS/CTS frame exchange between the DAP and non-AP STAs, UL data frame transmission by non-AP STAs in response to a trigger frame transmitted from the DAP, or transmission of DAP data frames in response to trigger frames transmitted from SAP may be performed through frame exchange.

Basically, for Multi-AP coordination to occur between two APs, they must be in a connected/joined state, or after exchanging their capabilities and requirements in advance (i.e., negotiation), Multi-AP coordination technology (e.g., C-TDMA, C-OFDMA, C-SR, etc.) can be performed based on the acquired information. In other words, for the C-TDMA operation considered in this specification to be performed smoothly, negotiation for C-TDMA operation must occur in advance between the SAP and DAP described above. However, the negotiation process for C-TDMA operation between APs and the information required for the negotiation have not yet been defined. In addition, C-TDMA, which can be newly defined/applied in UHR, requires various rules and signaling to be defined/added depending on whether it supports legacy devices, whereas relatively little signaling may be required if it only supports UHR devices. Alternatively, a separate spec change may not be required.

Therefore, this specification defines not only the basic information required during the negotiation process between APs prior to C-TDMA operation in a multi-AP coordination environment, but also additional information that can be used for negotiation between APs that only support UHR non-AP STAs. Furthermore, it presents the negotiation procedure for exchanging the defined information.

The negotiation process proposed in this specification enables each AP to perform C-TDMA operations and, based on the information acquired during the negotiation process, seamlessly exchange frames with UHR non-AP STAs. The specific designations (names) proposed in this specification are subject to change and are not limited to one.

That is, this specification defines information for indicating whether UHR STA is supported in the process of negotiating to perform coordinated TDMA between APs in a multi-AP environment, and describes how the information is negotiated.

### 1. A method for defining the negotiation procedure and necessary information required for APs to perform C-TDMA operations in a multi-AP environment

This specification defines the negotiation procedures required for APs to perform C-TDMA operations in a multi-AP environment, as well as the information that must be exchanged between APs during this negotiation process. Specifically, Section 1.1 defines the negotiation information exchanged between APs, and Section 1.2 presents the inter-AP negotiation procedure for exchanging the defined information. Furthermore, Section 1.3 presents an example of C-TDMA operation.

### 1.1 Negotiation Information between APs for Supporting UHR STAs in C-TDMA

This section describes the information that APs participating in C-TDMA must exchange during the pre-negotiation process. It also describes the information that APs must exchange in a multi-AP environment when supporting C-TDMA only to UHR non-AP STAs.

The negotiation information according to the present disclosure can be used by each AP to operate in C-TDMA, and can also operate based on this when exchanging frames with each non-AP STAs (or UHR non-AP STAs). For example, the negotiation information according to the present specification allows the AP that first acquires the TXOP to act as an SAP to determine the length of the TXOP duration to share with the DAP, and to match the operating bandwidth and channel between each AP for smooth coordination. In addition, by specifying/indicating that the AP participating in C-TDMA is an AP or BSS that only supports UHR non-AP STAs, the sharing AP that shares the TXOP with the corresponding AP may not require additional rules or signaling.

The information defined below can be transmitted individually from each AP, included in the Coordination Request/Response frames (e.g., SCS request/response, A-Control field), exchanged during the negotiation process between APs participating in multi-AP coordination. It is assumed that the coordination request and response frames can be defined as new frames or as new elements that can be transmitted together with existing request and response frames.

### 1) Coordination Request Frame

The coordination request frame transmitted during the negotiation process for C-TDMA proposed in this specification may contain negotiation information based on one or more combinations of A through H below.
A. Multi-AP group ID: ID for the set of APs that configure multi-AP coordination (e.g., 0, 1, 2, ...)
B. Multi-AP ID: ID assigned by the APs within the configured multi-AP group (e.g., 0, 1, 2, ...)
C. Multi-AP coordination type: Information about multi-AP coordination transmission schemes such as C-OFDMA, C-TDMA, J-TX, and C-SR.
D. Operating Channel: Information on the primary and punctured channels in operation
   -> For example, information on a common channel for smooth coordination between APs participating in C-TDMA
   -> For example, information on a common primary channel for APs participating in C-TDMA

Specifically, the Operating Channel can be defined as a new field that functions as the CCSF0 field within the EHT Operation Information field, indicating the channel center frequency index for 20/40/80 MHz channels.

Specifically, the Operating Channel can be defined as a new field that functions as the CCSF0 field within the EHT Operation Information field, indicating the channel center frequency for the primary 80 MHz channel of a 160 MHz channel or the channel center frequency for the primary 160 MHz channel of a 320 MHz channel.

Furthermore, the Operating Channel can be defined as a new field that functions as the CCSF1 field within the EHT Operation Information field, indicating the channel center frequency for a 160 MHz channel or the channel center frequency for a 320 MHz channel.
-> For example, punctured channel information of an AP participating in C-TDMA

Specifically, the Operating channel can be defined as a new field that serves as the Disabled Subchannel Bitmap field in the EHT Operation Information field, and a punctured 20 MHz subchannel can be indicated using a bitmap.

Ex) A bit value of 0 in the bitmap indicates that the corresponding 20 MHz subchannel is not punctured / A bit value of 1 in the bitmap indicates that the corresponding 20 MHz subchannel is punctured
-> The DAP's primary channel may be included within the channel on which the SAP operates.
-> The DAP's primary channel may be included within the operating channel, excluding the SAP's punctured channel.

E. Operating bandwidth: Operating bandwidth and maximum bandwidth information.
-> For example, information on the BW commonly used to facilitate smooth coordination between APs participating in C-TDMA.

Specifically, the Operating channel and primary channel information described above can be utilized.
-> For example, maximum bandwidth information of an AP participating in C-TDMA.

Specifically, the Operating bandwidth can be defined as a new field that plays the same role as the Channel Width field in the Control field of the EHT Operation Information field, thereby indicating the channel width, which is BSS BW information of each AP.

Ex) Setting the field to 0: Indicates 20 MHz bandwidth / Setting the field to 1: Indicates 40 MHz bandwidth / Setting the field to 2: Indicates 80 MHz bandwidth / Setting the field to 3: Indicates 160/80+80 MHz bandwidth / Setting the field to 4: Indicates 320/160+160 MHz bandwidth / The remaining values 5 to 7 of the field can be reserved.
-> For example, BW field information within the SIG-A field
-> For example, UL BW field information within the Common Info field of the MU-RTS TXS TF
-> The bandwidth of the DAP may be included within the total bandwidth over which the SAP operates.
-> For example, a new field for bandwidth indication can be added by modifying/redefining the Medium Time field of the QoS Characteristics element to include a new subfield.

Specifically, the Operating bandwidth can be defined as a new field that plays the same role as the Channel Width field in the Control field of the EHT Operation Information field to indicate the channel width, which is the BSS BW information of each AP.

Ex) Setting the field to 0: Indicating 20 MHz bandwidth / Setting the field to 1: Indicating 40 MHz bandwidth / Setting the field to 2: Indicating 80 MHz bandwidth / Setting the field to 3: Indicating 160/80+80 MHz bandwidth / Setting the field to 4: Indicating 320/160+160 MHz bandwidth / The remaining values 5 to 7 of the field can be reserved.

F. Required TXOP Duration: Information related to the TXOP duration that each AP wishes to share.
-> For example, a new field containing the Required TXOP Duration can be defined and indicated.

Specifically, a new Required Duration field (tentative name) can be defined to indicate the information required for C-TDMA operation and the Required TXOP Duration value.
-> For example, a new element containing the Required TXOP Duration can be defined and indicated.
   Specifically, a new C-TDMA Operation element (tentative name) can be defined to indicate information required for C-TDMA operation and the Required TXOP Duration value.
-> For example, the Required TXOP Duration can be indicated by including it in the QoS Characteristic element, which can be used to include negotiation information during the pre-negotiation process for C-TDMA operation, or in a newly defined element for negotiation in C-TDMA.
-> For example, the Required TXOP Duration can be indicated by including it in the UHR Operation element, which can be used to include announcement information during the announcement process of each AP for C-TDMA operation, or in a newly defined element for announcement in C-TDMA.

G. Low Latency Traffic Information: Information related to the low-latency traffic that each AP intends to transmit and receive.
-> For example, information from the QoS Characteristic element included in the SCS request/response frame, particularly the Delay Bound field within the QoS Characteristic element, can be utilized.

Specifically, the Delay Bound field value for the QoS traffic that each AP intends to transmit can be used as low-latency traffic information.

Through this, the SAP can use this field to determine whether TXOP sharing is necessary for a DAP that can complete MSDU or A-MSDU transmission within the end of the TXOP period to be shared (i.e., a DAP with pre-negotiated Low Latency Traffic information or a Delay Bound field value shorter than the allocated time). This field can be used to update the existing value.
-> For example, the MSDU Lifetime field information in the QoS Characteristic element can be utilized.

Specifically, the MSDU Lifetime field value for the QoS traffic each AP wishes to transmit can be utilized as Low Latency Traffic information.

Through this, the SAP can use this field to determine whether TXOP sharing is necessary for a DAP that does not discard MSDUs within the end of the TXOP interval to be shared (i.e., the pre-negotiated Low Latency Traffic information or the MSDU Lifetime field value has not expired within the allocated time), or to update the existing value.
-> For example, the Service Start Time field information in the QoS Characteristic element can be utilized.

Specifically, the Service Start Time field value for the QoS traffic each AP wishes to transmit can be utilized as Low Latency Traffic information.

Through this, the SAP can use this field to determine whether TXOP sharing is necessary for a DAP that can initiate the expected Service Period and frame exchange within the end point of the TXOP interval to be shared (i.e., a DAP with pre-negotiated Low Latency Traffic information or a Service Start Time field value shorter than the allocated time) or to update the existing value.
-> For example, TXOP sharing request information requested/indicated by an AP that requires transmission of Low Latency Traffic
-> For example, time-bound information of Low Latency Traffic requested/instructed by an AP that requires transmission of Low Latency Traffic (e.g., minimum time-bound within which Low Latency Traffic transmission must begin or maximum time-bound within which Low Latency Traffic transmission must successfully complete)
-> For example, arrival rate information of Low Latency Traffic requested/instructed by an AP that requires periodic transmission of Low Latency Traffic (e.g., arrival rate of Low Latency Traffic since the last reporting event).

H. UHR STA support: Information indicating whether only UHR non-AP STAs are supported.
-> For example, this is defined as 1-bit signaling to indicate UHR STA support information within a coordination request/response frame.

Example) bit 0: Indicates that only UHR non-AP STAs are supported. / bit 1: Indicates that HE/EHT/UHR non-AP STAs are supported.
-> For example, the information in the Special User Info field included in the Trigger frame, specifically the PHY Version Identifier among the information in the Special User Info field, is utilized.
-> For example, the QoS Characteristic element included in the SCS request/response frame, specifically the Reserved bit of the Control Info among the information in the QoS Characteristic element, is utilized. That is, it is defined as 1 bit signaling to indicate UHR STA support information among the Reserved bits.

Ex) bit 0: Indicates that only UHR non-AP STAs are supported / bit 1: Indicates that HE/EHT/UHR non-AP STAs are supported
-> The information/signaling may be defined to indicate that the AP supports only UHR non-AP STAs, or to indicate that it supports not only UHR but also HE/EHT non-AP STAs, but is not limited thereto.
- The ID and signaling names defined above may be changed, and information underlying multi-AP operation (e.g., channel information, DAP buffer information, etc.) may be included.

### 2) Coordination Response Frame (+ Status Code)

Additionally, the coordination response frame transmitted during the C-TDMA negotiation process proposed in this specification may include negotiation information based on one or more combinations of A to I below.
A. Multi-AP group ID: ID for a set of APs that configure multi-AP coordination (e.g., 0, 1, 2, ...)
B. Multi-AP ID: ID assigned by an AP within the configured multi-AP group (e.g., 0, 1, 2, ...)
C. Multi-AP coordination type: Information about multi-AP coordination transmission schemes such as C-OFDMA, C-TDMA, J-TX, and C-SR.
D. Operating Channel: Information on the primary and punctured channels currently in operation
   -> For example, information on the common operating channel for smooth coordination between APs participating in C-TDMA
   -> For example, information on the primary channel on which APs participating in C-TDMA can operate in common

Specifically, the Operating Channel can be defined as a new field that functions as the CCSF0 field within the EHT Operation Information field, indicating the channel center frequency index for a 20/40/80 MHz channel.

Specifically, the Operating Channel can be defined as a new field that functions as the CCSF0 field within the EHT Operation Information field, indicating the channel center frequency for the primary 80 MHz channel of a 160 MHz channel or the primary 160 MHz channel of a 320 MHz channel.

Furthermore, the Operating Channel can be defined as a new field that functions as the CCSF1 field within the EHT Operation Information field, indicating the channel center frequency for a 160 MHz channel or the channel center frequency for a 320 MHz channel.
-> For example, punctured channel information of an AP participating in C-TDMA

Specifically, the Operating channel can be defined as a new field that serves as the Disabled Subchannel Bitmap field in the EHT Operation Information field, and a punctured 20 MHz subchannel can be indicated using a bitmap.

Ex) A bit value of 0 in the bitmap indicates that the corresponding 20 MHz subchannel is not punctured / A bit value of 1 in the bitmap indicates that the corresponding 20 MHz subchannel is punctured
-> The DAP's primary channel may be included within the channel in which the SAP operates.
-> The DAP's primary channel may be included within the operating channel, excluding the SAP's punctured channel.

E. Operating bandwidth: Operating bandwidth and maximum bandwidth information
-> For example, common BW information for smooth coordination between APs participating in C-TDMA.
   Specifically, the Operating channel and primary channel information described above can be utilized.
-> For example, maximum bandwidth information for APs participating in C-TDMA.

Specifically, the Operating bandwidth can be defined as a new field that functions similarly to the Channel Width field in the Control field of the EHT Operation Information field, indicating the channel width, which is BSS BW information for each AP.

Ex) Setting the above field to 0: Indicates 20 MHz bandwidth / Setting the above field to 1: Indicates 40 MHz bandwidth / Setting the above field to 2: Indicates 80 MHz bandwidth / Setting the above field to 3: Indicates 160/80+80 MHz bandwidth / Setting the above field to 4: Indicates 320/160+160 MHz bandwidth / The remaining values 5 to 7 of the above fields can be reserved.
-> For example, BW field information within the SIG-A field
-> For example, UL BW field information within the Common Info field of the MU-RTS TXS TF
-> The bandwidth of the DAP can be included within the total bandwidth in which the SAP operates.
-> For example, a new field for bandwidth indication can be added by modifying/redefining the Medium Time field of the QoS Characteristics element to include a new subfield.

Specifically, the Operating Bandwidth can be defined as a new field that functions similarly to the Channel Width field in the Control field of the EHT Operation Information field, indicating the channel width, which is BSS BW information for each AP.

Ex) Setting the above field to 0: Indicates 20 MHz bandwidth / Setting the above field to 1: Indicates 40 MHz bandwidth / Setting the above field to 2: Indicates 80 MHz bandwidth / Setting the above field to 3: Indicates 160/80+80 MHz bandwidth / Setting the above field to 4: Indicates 320/160+160 MHz bandwidth / The remaining values 5 to 7 of the above field can be set as reserved.

F. Required TXOP duration: Information related to the TXOP duration that each AP wishes to share.
-> For example, a new field containing the Required TXOP Duration can be defined and indicated.

Specifically, a new Required Duration field (tentative name) can be defined to indicate information required for C-TDMA operation and the Required TXOP Duration value.
-> For example, a new element containing the Required TXOP Duration can be defined and indicated.

Specifically, a new C-TDMA Operation element (tentative name) can be defined to indicate information required for C-TDMA operation and the Required TXOP Duration value.
-> For example, the Required TXOP Duration can be indicated by including it within the QoS Characteristic element, which can be used to include negotiation information during the pre-negotiation process for C-TDMA operation, or within an element that can be newly defined for negotiation in C-TDMA.
-> For example, the Required TXOP Duration can be included in the UHR Operation element, which can be used to include announcement information during the announcement process of each AP for C-TDMA operation, or in an element that can be newly defined for announcement in C-TDMA.

G. Low Latency Traffic Information: Information related to the low-latency traffic that each AP intends to transmit and receive.
-> For example, information from the QoS Characteristic element included in the SCS request/response frame, particularly the Delay Bound field information among the QoS Characteristic element information, can be utilized.

Specifically, the Delay Bound field value for the QoS traffic each AP intends to transmit can be used as Low Latency Traffic information.

Through this, the SAP can use this field to determine whether TXOP sharing is necessary for a DAP that can complete MSDU or A-MSDU transmission within the end of the TXOP interval to be shared (i.e., with pre-negotiated Low Latency Traffic information or a Delay Bound field value shorter than the allocated time). This field can be used to update the existing value.
-> For example, the MSDU Lifetime field information within the QoS Characteristic element can be utilized.

Specifically, the MSDU Lifetime field value for the QoS traffic each AP intends to transmit can be used as Low Latency Traffic information.

Through this, the SAP can use this field to determine whether TXOP sharing is necessary for DAPs that do not discard MSDUs within the end of the TXOP interval to be shared (i.e., pre-negotiated Low Latency Traffic information or MSDU Lifetime field values that have not expired within the allocated time) or to update the existing value.
-> For example, the Service Start Time field information in the QoS Characteristic element can be utilized.

Specifically, the Service Start Time field value for the QoS traffic each AP intends to transmit can be used as Low Latency Traffic information.

Through this, the SAP can determine whether TXOP sharing is necessary for DAPs that can initiate the expected Service Period and frame exchange within the end of the TXOP interval to be shared (i.e., pre-negotiated Low Latency Traffic information or Service Start Time field values that are shorter than the allocated time). Or, the SAP can use this field to update the existing value.
-> For example, TXOP sharing request information requested/instructed by an AP that requires low-latency traffic transmission.
-> For example, time-bound information for low-latency traffic requested/instructed by an AP that requires low-latency traffic transmission (e.g., the minimum time-bound within which low-latency traffic transmission must begin or the maximum time-bound within which low-latency traffic transmission must successfully complete).
-> For example, arrival rate information for low-latency traffic requested/instructed by an AP that requires periodic low-latency traffic transmission (e.g., the arrival rate of low-latency traffic since the last reporting event).

H. UHR STA support: Information indicating whether only UHR non-AP STAs are supported.
-> For example, this is defined as a 1-bit signaling bit within a coordination request/response frame to indicate UHR STA support information.

Example: bit 0: Indicates support for only UHR non-AP STAs. / bit 1: Indicates support for HE/EHT/UHR non-AP STAs.
-> For example, this uses the Special User Info field included in the Trigger frame, specifically the PHY Version Identifier within the Special User Info field.
-> For example, this uses the QoS Characteristic element included in the SCS request/response frame, specifically the Reserved bit in the Control Info field within the QoS Characteristic element. In other words, this is defined as a 1-bit signaling bit within the Reserved bit to indicate UHR STA support information.

Ex) bit 0: Indicates that only UHR non-AP STAs are supported / bit 1: Indicates that HE/EHT/UHR non-AP STAs are supported
-> The information/signaling can be defined to indicate that the AP supports only UHR non-AP STAs, or to indicate that it supports not only UHR but also HE/EHT non-AP STAs, but is not limited thereto.

### I. Status Code: Accept/Reject/Recommendation information for the Coordination request

-> For example, Accept or Success (e.g., SUCCESS)
-> For example, a Reject with a Reject or Recommendation (specifically, a Reject code with a Reject reason (e.g., REJECTED_BAD_SUPPORTED_CHANNELS) or a Reject code with a Recommendation (e.g., REJECTED _WITH_SUGGESTED_CHANGES)).

If the Status Code value includes a Reject or Recommendation, it may contain information for a new negotiation. That is, the neighboring AP receiving the request frame may include additional information about the Operating Channel and Bandwidth, Required TXOP Duration, Low Latency Traffic Information, and UHR STA Support described above.
- The ID and signaling names defined above may be changed, and information underlying multi-AP operation (e.g., channel information, DAP buffer information, etc.) may also be included.

### 1.2 Negotiation Procedure between APs in C-TDMA (Preliminary Procedure for Request/Response Frame Exchange)

The negotiation process between APs proposed in this section for multi-AP coordination enables target APs to participate and operate in C-TDMA. Since the AP-to-AP negotiation process has not yet been defined, the existing Request/Response negotiation between APs and non-AP STAs can be utilized for inter-AP negotiation for C-TDMA operation. However, the subjects of coordination requests/responses for multi-AP coordination and C-TDMA operation, as well as the criteria and conditions for coordination requests, may be less clear than negotiation between APs and non-AP STAs. Therefore, these aspects need to be specified.

First, the criteria for APs willing to participate in multi-AP coordination to transmit coordination request frames can be determined by the following examples:

### Option 1) Individual coordination requests based on the coordination needs of each AP

When multi-AP coordination is required, each AP can individually transmit a coordination request frame to a specific AP based on frames (e.g., management, control, and data frames) overheard from neighboring APs. The need for multi-AP coordination may arise from burst data transmission by individual APs and the occurrence of low-latency traffic. Upon receiving a coordination request frame transmitted according to the coordination need of an individual AP, a specific AP can transmit a response frame for the corresponding coordination request based on the status code.

### Option 2) Coordination Request: Modifying and Utilizing the Beacon Frame

Each AP can overhear the periodically transmitted beacon frame to determine whether other APs are interested in participating in multi-AP coordination and C-TDMA. To achieve this, new signaling bits can be defined and added to the beacon frame. For example, 1-bit signaling can be utilized (using the reserved bit in the Capability Information field within the frame body).

### Ex) bit 0: Indicates participation in multi-AP cooperation / bit 1: Indicates non-participation in multi-AP cooperation

That is, if an AP receives a beacon frame containing the new signaling bit (equal to 1) described above and wishes to participate in multi-AP cooperation, it can decode the information and elements following the signaling bit and acquire additional information related to multi-AP cooperation. After securing a channel through media contention, the AP can transmit a coordination request frame to the corresponding neighboring AP. The neighboring AP receiving the coordination request frame can then transmit a coordination response frame based on the status code. Conversely, non-AP STAs can ignore the signaling bit information regarding multi-AP cooperation.

Based on the criteria for requesting negotiation described above, the coordination negotiation process between an AP (e.g., AP 1) and a neighboring AP (e.g., AP 2) can be performed in a two-way manner as follows.

Step 1) The AP transmits a coordination request frame to the neighboring AP.

Step 2) The neighboring AP, upon receiving the coordination request frame, transmits a coordination response frame to the AP that transmitted the coordination request frame.

At this time, the neighboring AP that receives the coordination request frame in Step 2) can transmit a coordination response frame including response information for the coordination request based on the Status Code. For example, if the coordination response frame includes a code for Accept or Success, coordination for C-TDMA operation can be considered successful. On the other hand, if the AP receives a coordination response frame with a Reject code or a Reject code including a Recommendation, the AP can retransmit the coordination request frame to the neighboring AP. That is, the AP can include the same information as the information included in the coordination request frame transmitted during the initial negotiation process or include changed information based on the Rejection reason or Recommendation in the received coordination response frame. In addition, if the AP that received the coordination response frame with a Reject code or a Reject code including a Recommendation does not retransmit the coordination request frame, coordination can be considered to have failed (due to rejection).

### 1.3 Example of C-TDMA operation according to negotiation

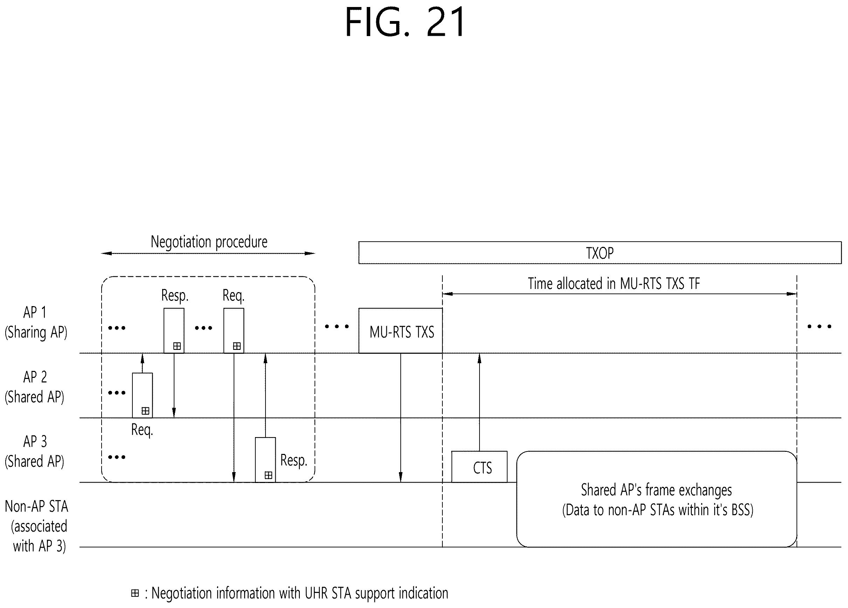

FIG. 21 illustrates an example of a C-TDMA operation based on Pair-to-pair based Negotiation, including UHR STA support information.

Section 1.1 defines negotiation information for C-TDMA operation, and Section 1.2 presents a negotiation procedure for C-TDMA based on this information. Section 1.3 presents an example of C-TDMA operation based on the negotiation information and procedure. Figure 21 illustrates an example of C-TDMA operation between APs that have performed a pair-to-pair negotiation procedure that includes UHR STA support information.

In FIG. 21, before acquiring a TXOP, APs whose roles as SAPs or DAPs have not yet been determined transmit and receive coordination request frames and corresponding coordination response frames with neighboring APs, performing a pre-negotiation procedure for multi-AP cooperation. Through this negotiation procedure, which exchanges request and response frames containing information for C-TDMA operation, APs seeking multi-AP cooperation and C-TDMA operation can obtain information about each other. An AP that can acquire a TXOP and perform the SAP role can decide based on the negotiation information whether to first perform individual FEs (Frame Exchanges) with STAs within its BSS or to share the TXOP with a specific DAP.

At this time, an AP that receives a coordination request or response frame containing and indicating UHR STA support information indicating whether it only supports UHR STAs can assume that the corresponding AP intends to perform FE (Frame Exchange) only for UHR STAs. If a specific AP that is aware of this acquires a TXOP and acts as a SAP, it can define additional signaling that may be required from the SAP for FE with legacy devices within the DAP's BSS. Alternatively, the SAP can preferentially share the TXOP with UHR STA support DAPs that do not require new procedures (or based on an agreement through negotiation).

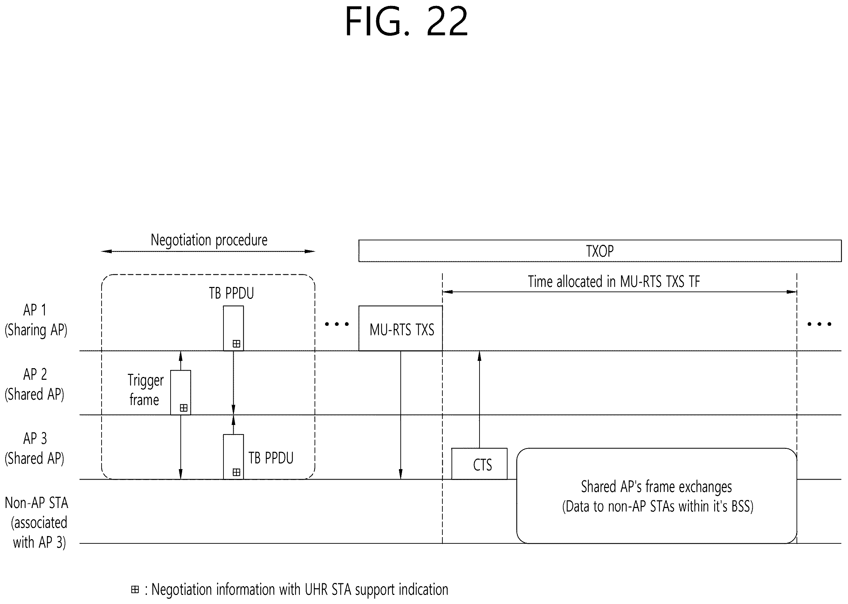

FIG. 22 illustrates an example of a C-TDMA operation based on Broadcast based Negotiation, including UHR STA support information.

In Fig. 22, before acquiring a TXOP, each AP whose role as a SAP or DAP has not been determined can broadcast a TF containing C-TDMA-related information to participate in multi-AP cooperation and receive TB PPDUs from corresponding APs. APs that wish to operate in multi-AP cooperation and C-TDMA can obtain information about each other through a broadcast-based negotiation procedure that exchanges TFs and TB PPDUs containing information for C-TDMA operation. An AP that can acquire a TXOP and act as a SAP can decide based on the negotiation information whether to first perform individual FEs with STAs within its BSS or to share the TXOP with a specific DAP.

At this time, an AP that has acquired UHR STA support information indicating whether it only supports UHR STAs can assume that the AP intends to perform FE only for UHR STAs. If a specific AP that is aware of this acquires a TXOP and acts as a SAP, it can define additional signaling that may be required from the SAP for FE with legacy devices within the DAP's BSS. Alternatively, the SAP can preferentially share the TXOP with UHR STA-supporting DAPs that do not require new procedures (or based on an agreement through negotiation).

This specification defines the negotiation process that must occur between APs before C-TDMA operation in a multi-AP cooperation environment, as well as the information that each AP must exchange during the negotiation process. Based on the negotiation information based on one or more combinations described in Section 1.1, APs that have successfully completed coordination can perform C-TDMA operation. That is, based on the negotiation information defined in Section 1.1, each AP can exchange the necessary information in advance through the negotiation process in Sections 1.2 and 1.3, and then finally create a multi-AP table for operating multi-AP coordination. Based on the table and information, the SAP can support transmission based on a coordination scheme to a specific DAP or a DAP that only supports UHR non-AP STAs. Through this, the DAP can perform frame exchange with (UHR) non-AP STAs within its BSS within the allocated time or resources.

### 2. Device/Method Operating Example of This Specification

### 2.1. PPDU Transmitting/Receiving Signals of This Specification

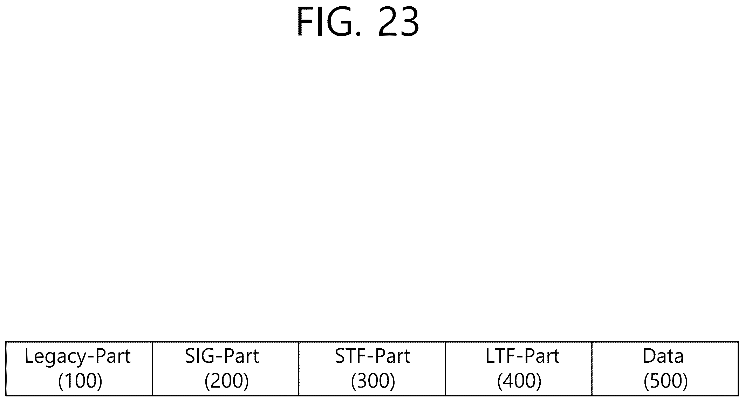

FIG. 23 illustrates an example of a PPDU of the present specification.

FIG. 23 illustrates an example of a SU/MU PPDU that can be used in a UHR system, which may include some of the format features of the EHT-PPDU described above. All or part of the illustrated parts (i.e., fields) may be divided into multiple subparts/subfields. Each field (and subfield) may be transmitted in units of 4us * N (where N is an integer). Additionally, the PPDU may include a Guard Interval (or Short GI) of the conventional Wi-Fi standard. A common subcarrier frequency spacing value (delta_f=312.5 kHz/N or 312.5 kHz*N, N=integer) may be applied to all of the fields shown, or a first delta_f may be applied to the first part (e.g., all of Legacy-Part, all/part of SIG-Part), and a second delta_f (e.g., a value smaller than the first delta_f) may be applied to all/part of the remaining parts.

Some of the fields shown may be omitted, and the order of the fields is provided for illustrative purposes only and may be varied in various ways. For example, the subfields of the SIG-Part (200) (e.g., U-SIG) may be placed before the STF-Part (300), and the remaining subfields of the SIG-Part (200) (e.g., UHR-SIG) may be placed after the STF-Part (300).

The illustrated Legacy Part (100) may include at least one of the conventional Non-HT Short Training Field (L-STF), Non-HT Long Training Field (L-LTF), and Non-HT Signal Field (L-SIG).

The illustrated SIG-Part (200) may include various control information for the transmitted PPDU. For example, it may include control information for decoding the STF-Part (300), LTF-Part (400), and Data (500). For example, it may include all or part of the information included in the previously described U-SIG information and EHT-SIG information.

The illustrated STF-Part (300) may include an STF sequence.

The illustrated LTF-Part (400) may include a training field (i.e., an LTF sequence) for channel estimation.

The Data field (500) may include user data and a packet for the upper layer. That is, it may include an MPDU (MAC Frame).

The MU-RTS Trigger frame described in this specification belongs to one of the types of Trigger frames corresponding to MAC frames. That is, the data field (500) illustrated may include an MU-RTS Trigger frame.

### 2.2. Methods of this Specification

### 2.2.1. Transmission Method

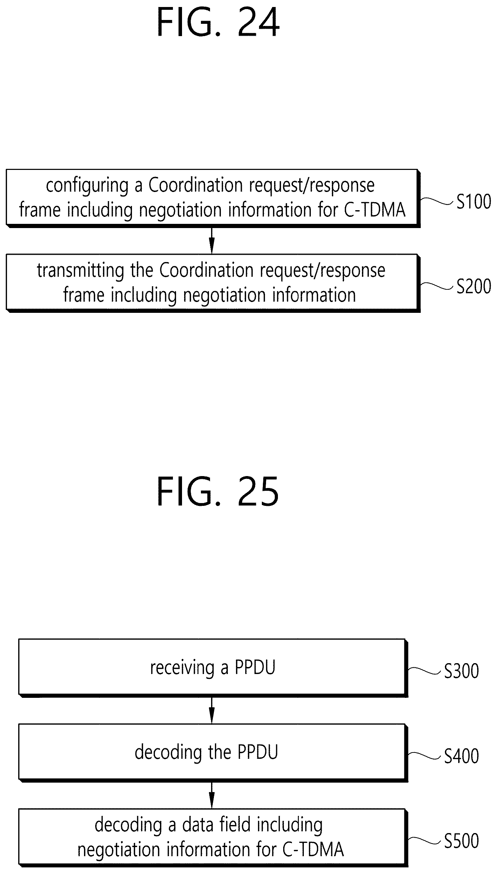

FIG. 24 illustrates a procedure for a transmitting device according to the present embodiment to perform negotiations necessary for performing a C-TDMA operation.

The example of Figure 24 can be performed by a transmitting device (AP and/or non-AP STA).

The SAP and DAP described herein may be included in the AP.

Some of the steps (or detailed sub-steps described below) in the example of Figure 24 may be omitted or modified.

S100: The coordination request/response frame generated by the transmitting device (transmitting STA) may include negotiation information based on one or more combinations for C-TDMA operation in the multi-AP cooperation defined in Section 1.1.

S200: In step S200, the transmitting device may construct an MPDU including a coordination request/response frame containing negotiation information for the C-TDMA configured in step S100. Furthermore, the transmitting device may construct/generate a PPDU including the MPDU in a data field. This step of constructing/generating the PPDU may include constructing/generating each field of the PPDU. Specifically, step S200 may include constructing U-SIG and UHR-SIG fields and a data field. This may include constructing a field including control information indicating the size/location of the RU (i.e., an N bitmap) and/or constructing a field including an identifier of the STA receiving the RU (i.e., an AID).

Furthermore, step S200 may include generating an STF/LTF sequence to be transmitted via a specific RU. The STF/LTF sequence may be generated based on a preset STF generation sequence/LTF generation sequence.

Additionally, step S200 may include generating an MPDU to be transmitted via a specific RU.

The transmitting device may transmit the PPDU configured as described above to the receiving device.

During PPDU transmission, the transmitting device may perform at least one of the following operations: CSD, Spatial Mapping, IDFT/IFFT operation, and GI insertion.

Signals/fields/sequences configured according to this specification may be transmitted in the form illustrated in FIG. 23.

### 2.2.2. Reception Method

FIG. 25 illustrates a procedure for a receiving device according to the present embodiment to perform negotiations necessary for performing a C-TDMA operation.

The above-described PPDU can be received according to the example of FIG. 25.

The example of FIG. 25 can be performed by a receiving device (AP and/or non-AP STA).

Some of the steps (or detailed sub-steps described below) in the example of FIG. 25 may be omitted.

S300: The receiving device (receiving STA) may receive all or part of the PPDU through step S300. The received signal may have the format of FIG. 23.

The sub-steps of step S300 may be determined based on step S200. Specifically, step S300 may perform an operation to restore the results of the CSD, spatial mapping, IDFT/IFFT operation, and GI insertion operation applied in step S200.

S400: The receiving device may decode all or part of the PPDU. Additionally, the receiving device can obtain control information related to the Tone Plan (i.e., RU) from the decoded PPDU.

More specifically, the receiving device can decode the L-SIG, U-SIG, and UHR-SIG fields of the PPDU based on the Legacy STF/LTF and obtain information contained in the L-SIG, U-SIG, and UHR-SIG fields.

Furthermore, the receiving device can decode the remainder of the PPDU based on the Tone Plan (i.e., RU) information obtained through step S400. For example, the receiving device can decode the STF/LTF field of the PPDU based on the Tone Plan information. Furthermore, the receiving device can decode the data field of the PPDU based on the Tone Plan information and obtain the MPDU contained in the data field.

Furthermore, the receiving device can perform a processing operation to forward the decoded data through step S400 to the upper layer (i.e., the MAC layer). Furthermore, if the upper layer instructs the PHY layer to generate a signal in response to the data forwarded to the upper layer, the receiving device can perform subsequent operations.

S500: When decoding a data field, the receiving device may obtain negotiation information for C-TDMA, as described in Section 1.1 of this specification.

The receiving STA may then perform a processing operation to transmit the data decoded from the data field to a higher layer (e.g., the MAC layer). Furthermore, if the higher layer instructs the PHY layer to generate a signal in response to the data transmitted to the higher layer, subsequent operations may be performed.

Based on the data acquired through step S500, the receiving STA may accept or reject the coordination request. If rejecting, a recommendation may be included.

### 2.3. Devices of this specification

### 2.3.1. Transmitter device

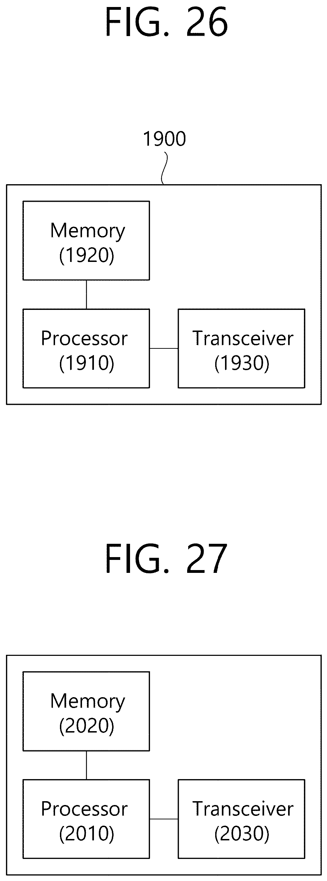

FIG. 26 illustrates a transmitting device performing negotiations necessary for performing a C-TDMA operation according to the present embodiment.

A PPDU containing the aforementioned MPDU can be transmitted based on the device of FIG. 26.

The example of FIG. 26 relates to an example of a transmitting device (AP and/or non-AP STA).

As illustrated in FIG. 26, the transmitting device may include a memory (1920), a processor (1910), and a transceiver (1930).

The memory (1920) may store one or more negotiation information regarding one or more APs participating in the C-TDMA described herein.

The processor (1910) may generate a coordination request/response frame based on the information stored in the memory (1920) and generate an MPDU including the coordination request/response frame. Furthermore, the processor may construct a PPDU including the MPDU. An example of a PPDU generated by the processor (1910) may be as shown in FIG. 23.

Furthermore, the processor (1910) may be configured to transmit the PPDU including the generated coordination request/response frame via the transceiver (1930).

The processor (1910) may perform all or part of the operations illustrated in FIG. 24.

The illustrated transceiver (1930) includes an antenna and may perform analog signal processing. Specifically, the processor (1910) may control the transceiver (1930) to transmit a PPDU generated by the processor (1910).

Alternatively, the processor (1910) may generate a transmission PPDU and store information about the transmission PPDU in the memory (1920).

### 2.3.2. Receiving Device

FIG. 27 illustrates a receiving device performing negotiations necessary for performing a C-TDMA operation according to the present embodiment.

A PPDU including the aforementioned MPDU can be received based on the device of FIG. 27.

As illustrated in FIG. 27, the receiving device may include a memory (2020), a processor (2010), and a transceiver (2030).

The transceiver (2030) may receive a PPDU under the control of the processor (2010). For example, the transceiver (2030) may include multiple subunits (not shown). For example, the transceiver (2030) may include at least one receiving antenna and a filter for the receiving antenna.

The PPDU received via the transceiver (2030) may be stored in the memory (2020). The processor (2010) may process decoding of the received PPDU via the memory (2020). The processor (2010) may obtain negotiation information regarding an AP that wishes to participate in C-TDMA or other Multi-AP schemes (e.g., C-BF, C-SR) from the coordination request/response frame included in the PPDU, and store the obtained information in the memory (2020).

For example, the processor (2010) may be configured to receive a PPDU via the transceiver (2030) and decode the received PPDU to obtain an MPDU (e.g., a coordination request/response frame). Furthermore, the processor (2010) may be configured to decode/parse the coordination request/response frame to obtain C-TDMA negotiation information (or information about Multi-AP schemes) regarding an AP connected to the receiving device. Furthermore, the processor (2010) may be configured to allow the receiving STA to accept or reject a coordination request based on the negotiation information regarding the AP, and to exchange frames with other devices via the transceiver (2030).

The processor (2010) may decode the received PPDU. Specifically, the processor may perform an operation to restore the results of CSD, Spatial Mapping, IDFT/IFFT operations, and GI insertion applied to the PPDU. The operations of restoring the results of CSD, Spatial Mapping, IDFT/IFFT operations, and GI insertion can be performed through multiple processing units (not shown) individually implemented within the processor (2010).

Additionally, the processor (2010) can decode the data field of the PPDU received via the transceiver (2030).

Furthermore, the processor (2010) can process the decoded data. For example, the processor (2010) can perform a processing operation to transmit information regarding the decoded data field to a higher layer (e.g., the MAC layer). Furthermore, if the higher layer instructs the PHY layer to generate a signal in response to the data transmitted to the higher layer, the processor (2010) can perform a subsequent operation.

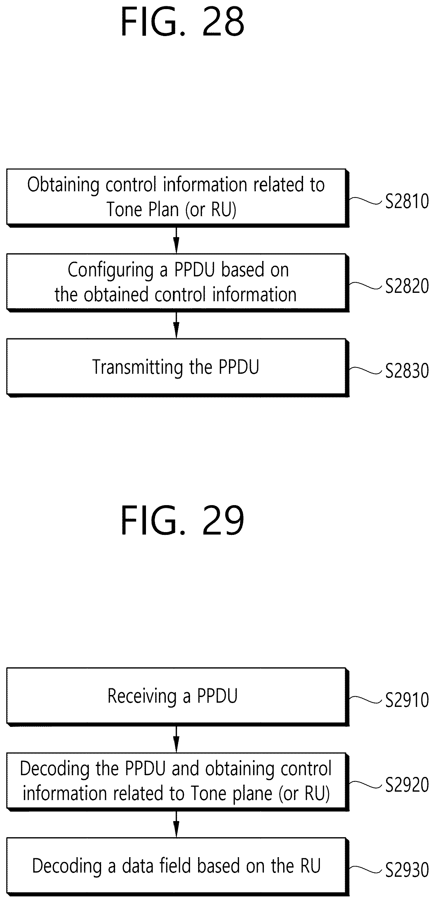

FIG. 28 is a flowchart illustrating the operation of a transmitting device according to the present embodiment.

The example of FIG. 28 may be performed by a transmitting device (AP and/or non-AP STA).

Some of each step (or detailed sub-step to be described later) of the example of FIG. 28 may be skipped/omitted.

Through step S2810, the transmitting device (transmitting STA) may obtain information about the above-described tone plan. As described above, the information about the tone plan includes the size and location of the RU, control information related to the RU, information about a frequency band including the RU, information about an STA receiving the RU, and the like.

Through step S2820, the transmitting device may construct/generate a PPDU based on the acquired control information. Configuring/generating the PPDU may include configuring/generating each field of the PPDU. That is, step S2820 includes configuring the EHT-SIG field including control information about the tone plan. That is, step S2820 includes configuring a field including control information (e.g., N bitmap) indicating the size/position of the RU; and/or configuring a field including an identifier of an STA receiving the RU (e.g., AID).

Also, step S2820 may include generating an STF/LTF sequence transmitted through a specific RU. The STF/LTF sequence may be generated based on a preset STF generation sequence/LTF generation sequence.

Also, step S2820 may include generating a data field (i.e., MPDU) transmitted through a specific RU.

The transmitting device may transmit the PPDU constructed through step S2820 to the receiving device based on step S2830.

While performing step S2830, the transmitting device may perform at least one of operations such as CSD, Spatial Mapping, IDFT/IFFT operation, and GI insertion.

A signal/field/sequence constructed according to the present specification may be transmitted in the form of FIG. 5.

FIG. 29 is a flowchart illustrating the operation of a receiving device according to the present embodiment.

The aforementioned PPDU may be received according to the example of FIG. 29.

The example of FIG. 29 may be performed by a receiving apparatus/device (AP and/or non-AP STA).

Some of each step (or detailed sub-step to be described later) of the example of FIG. 29 may be skipped/omitted.

The receiving device (receiving STA) may receive all or part of the PPDU through step S2910. The received signal may be in the form of FIG. 5.

A sub-step of step S2910 may be determined based on step S2830 of FIG. 28. That is, in step S2910, an operation of restoring the result of the CSD, Spatial Mapping, IDFT/IFFT operation, and GI insertion operation applied in step S2830 may be performed.

In step S2920, the receiving device may perform decoding on all/part of the PPDU. Also, the receiving device may obtain control information related to a tone plan (i.e., RU) from the decoded PPDU.

More specifically, the receiving device may decode the L-SIG and EHT-SIG of the PPDU based on the legacy STF/LTF and obtain information included in the L-SIG and EHT SIG fields. Information on various tone plans (i.e., RUs) described in this specification may be included in the EHT-SIG, and the receiving STA may obtain information on the tone plan (i.e., RU) through the EHT-SIG.

In step S2930, the receiving device may decode the remaining part of the PPDU based on information about the tone plan (i.e., RU) acquired through step S2920. For example, the receiving STA may decode the STF/LTF field of the PPDU based on information about one plan (i.e., RU). In addition, the receiving STA may decode the data field of the PPDU based on information about the tone plan (i.e., RU) and obtain the MPDU included in the data field.

In addition, the receiving device may perform a processing operation of transferring the data decoded through step S2930 to a higher layer (e.g., MAC layer). In addition, when generation of a signal is instructed from the upper layer to the PHY layer in response to data transmitted to the upper layer, a subsequent operation may be performed.

Hereinafter, the above-described embodiment will be described with reference to FIG. 1 to FIG. 29.

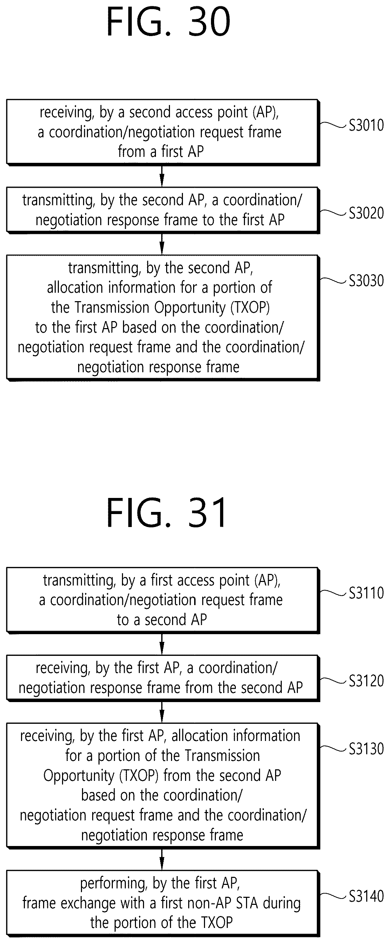

FIG. 30 is a flowchart illustrating a procedure for performing negotiation to perform C-TDMA operation on the Sharing AP side according to the present embodiment.

The example of FIG. 30 may be performed in a network environment that supports a next-generation wireless LAN system (Ultra High Reliability (UHR) wireless LAN system or next Wi-Fi). The next-generation wireless LAN system is an improved version of the 802.1 The system and can satisfy backward compatibility with the 802.11be system.

An example of FIG. 30 is performed in a second AP, and the second AP and the first AP may be configured as a shared AP or a sharing AP after the coordination/negotiation phase in multi-AP communication. The first non-AP STA of the present embodiment may correspond to at least one station (STA).

This embodiment proposes a method for performing negotiation between APs to perform C-TDMA operation in multi-access point (multi-AP) communication (or multi-AP operation). In particular, this embodiment proposes a method for defining information required for negotiation to perform C-TDMA operation. Furthermore, this embodiment is not limited to the C-TDMA scheme, and other coordinated multi-AP schemes such as C-SR and CBF may be applied.

In step S3010, a second access point (AP) receives a coordination/negotiation request frame from a first AP.

In step S3020, the second AP transmits a coordination/negotiation response frame to the first AP.

In step S3030, after the second AP obtains Transmission Opportunity (TXOP), based on the second AP being set as a Sharing AP that controls coordination between multiple APs, allocation information for a portion of the TXOP is transmitted to the first AP based on the coordination/negotiation request frame and the coordination/negotiation response frame.

Transmitting the allocation information for the portion of the TXOP to the first AP includes sharing or allocating time resources of the second AP to the first AP.

During the portion of the TXOP or the time shared or allocated from the second AP, frame exchange is performed between the firstAP and the first non-AP station (STA).

The coordination/negotiation request frame includes negotiation information for coordination between the multiple APs. The coordination/negotiation response frame includes information for an acceptance or rejection to the coordination/negotiation request frame based on the negotiation information.

After the second AP obtains the TXOP based on the coordination/negotiation request frame and the coordination/negotiation response frame, the second AP is set as a Sharing AP that controls coordination between the multiple APs, and the first AP is set as a Shared AP that is allocated or shared with resources from the Sharing AP based on the negotiation information. The first non-AP STA is a non-AP STA within a basic service set (BSS) of the first AP. That is, at the time of performing the negotiation procedure based on the coordination/negotiation request frame and the coordination/negotiation response frame, the roles of the first and second APs as Sharing APs or Shared APs may not be determined. After the negotiation procedure is completed and a specific AP obtains the TXOP, the AP may function as a Sharing AP, and the other AP that is allocated or shared with resources such as the TXOP may function as a Shared AP.

That is, the present embodiment proposes a method for performing negotiation between multiple APs to perform a transmission scheme for coordination between multiple APs (or coordination between APs in a multi-AP environment). Furthermore, the present embodiment proposes a method for defining information to be exchanged between the multiple APs during the negotiation process. Accordingly, based on the proposed negotiation information, APs that have successfully cooperated can perform a coordinated multi-AP scheme such as C-TDMA. In addition, based on the proposed negotiation information, the Sharing AP can share a TXOP with the Shared AP, and through this, the Shared AP may perform frame exchange with a non-AP STA (or UHR non-AP STA) within its BSS during the allocated TXOP. In addition, by proposing a negotiation method to effectively perform communication between the multiple APs, it is possible to perform appropriate scheduling between each AP, and thereby, it is possible to expect an increase in the overall network throughput.

The negotiation request frame may include at least one of first to eighth information.

The first information may include information for an identifier for a group of APs that configures coordination between the multiple APs. The second information may include information for identifiers for APs within the group. The third information may include information for a scheme for the coordination between the multiple AP. The fourth information may include information for an operating channel. The fifth information may include information for an operating bandwidth. The sixth information may include interval information for the TXOP. The seventh information may include information for low-latency traffic. The eighth information may include information for Ultra High Reliability (UHR) STA support.

The negotiation response frame may include at least one of the first to eighth information and ninth information.

The ninth information may include information for a status code. The information for the status code may include information for the acceptance or the rejection to the negotiation request frame.

The scheme for the coordination between the multiple APs may include Coordinated-Time Division Multiplexing Access (C-TDMA), Coordinated-Spatial Reuse (C-SR), Coordinated-beamforming (C-BF), or Coordinated-Orthogonal Frequency Division Multiple Access (C-OFMA).

The information for the operating channel may include information for a channel on which the first and second APs operate in common or information for a punctured channel of the first and second APs. A primary channel of the first AP may be included in the channel on which the second AP operates. The primary channel of the first AP may be included in the operating channel excluding the punctured channel of the second AP.

The information for the operating bandwidth may include information for a bandwidth in which the first and second APs operate in common or information for a maximum bandwidth of the first and second APs. The bandwidth of the first AP may be included within an entire bandwidth in which the second AP operates.

The information for the low-latency traffic may include information for a time-bound of the low-latency traffic required by the first or second AP or information for an arrival rate.

The information for the UHR STA support may include information on whether the first non-AP STA is supported only as a UHR non-AP STA. For example, based on the information for the UHR STA support being set to 0, the first non-AP STA may be set only as the UHR non-AP STA. Based on the information for the UHR STA support being set to 1, the first non-AP STA may be set as a High efficiency (HE) non-AP STA, an Extreme High Throughput (EHT) non-AP STA, or a UHR non-AP STA.

By adding the information for the UHR STA support to the coordination/negotiation request/response frame, it is possible to specify that the AP participating in the coordination between the multiple APs is an AP or BSS that only supports UHR non-AP STAs, thereby eliminating the need for the Sharing AP to define additional rules or signaling for the Shared AP.

Furthermore, the operations for determining the AP participating in the coordination between the multiple APs and transmitting the coordination/negotiation request frame to the AP are as follows.

The first AP may overhear a beacon frame from a neighboring AP. Based on the beacon frame, the first AP may determine an AP participating in the coordination between the multiple APs as the neighboring AP. Based on the beacon frame, the first AP may transmit the coordination/negotiation request frame to the neighboring AP.

The beacon frame may include a first bit. For example, based on the first bit being set to 0, the first bit may indicate that the neighboring AP participates in the coordination between the multiple APs. Based on the first bit being set to 1, the first bit may indicate that the neighboring AP does not participate in the coordination between the multiple APs. The neighboring AP may be the second AP.

This embodiment proposes a pair-to-pair negotiation procedure using the coordination/negotiation request frame and coordination/negotiation response frame. Furthermore, this embodiment can also propose a broadcast-based negotiation procedure. In this case, a trigger frame may be used instead of the coordination/negotiation request frame, and a TB (Trigger-Based) PPDU may be used instead of the coordination/negotiation response frame. In this case, the trigger frame may be broadcast.

After the second AP obtains the TXOP, the second AP may transmit a Multi User-Request to Send (MU-RTS) TXOP sharing (TXS) trigger frame to the first AP. The second AP may receive a Clear to Send (CTS) frame from the first AP in response to the MU-RTS TXS trigger frame. The MU-RTS TXS trigger frame may include allocation information for the portion of the TXOP.

In addition, after the second AP obtains the TXOP, the second AP may perform frame exchange with a second non-AP STA during the TXOP (or the portion of the TXOP). The second non-AP STA may be a non-AP STA within the BSS of the second AP, and may be a legacy non-AP STA or a UHR non-AP STA. Accordingly, the information for the UHR STA support may further include information on whether the second non-AP STA is supported only as a UHR non-AP STA.

FIG. 31 is a flowchart illustrating a procedure for performing negotiation to perform C-TDMA operation on the Shared AP side according to the present embodiment.

The example of FIG. 31 may be performed in a network environment that supports a next-generation wireless LAN system (Ultra High Reliability (UHR) wireless LAN system or next Wi-Fi). The next-generation wireless LAN system is an improved version of the 802.1 The system and can satisfy backward compatibility with the 802.11be system.

An example of FIG. 31 is performed in a first AP, and the first AP and the second AP may be configured as a shared AP or a shared AP after the cooperation phase in multi-AP communication. The first non-AP STA of the present embodiment may correspond to at least one station (STA).

This embodiment proposes a method for performing negotiation between APs to perform C-TDMA operation in multi-access point (multi-AP) communication (or multi-AP operation). In particular, this embodiment proposes a method for defining information required for negotiation to perform C-TDMA operation. Furthermore, this embodiment is not limited to the C-TDMA scheme, and other coordinated multi-AP schemes such as C-SR and CBF may be applied.

In step S3110, a first access point (AP) transmits a coordination/negotiation request frame to a second AP. Or, it includes the case where the second AP transmits a coordination/negotiation request frame to the first AP.

In step S3120, the first AP receives a coordination/negotiation response frame from the second AP. Or, it includes a case where the second AP receives a coordination/negotiation response frame from the first AP.

In step S3130, the first AP receives allocation information for a portion of the Transmission Opportunity (TXOP) from the second AP based on the coordination/negotiation request frame and the coordination/negotiation response frame.

Receiving the allocation information for the portion of the TXOP time includes sharing or being allocated time resources of the second AP.

In step S3140, the first AP performs frame exchange with a first non-AP station (STA) during the portion of the TXOP.

The coordination/negotiation request frame includes negotiation information for coordination between the multiple APs. The coordination/negotiation response frame includes information for an acceptance or rejection to the coordination/negotiation request frame based on the negotiation information.

After the second AP obtains the TXOP based on the coordination/negotiation request frame and the coordination/negotiation response frame, the second AP is set as a Sharing AP that controls coordination between the multiple APs, and the first AP is set as a Shared AP that is allocated or shared with resources from the Sharing AP based on the negotiation information. The first non-AP STA is a non-AP STA within a basic service set (BSS) of the first AP. That is, at the time of performing the negotiation procedure based on the coordination/negotiation request frame and the coordination/negotiation response frame, the roles of the first and second APs as Sharing APs or Shared APs may not be determined. After the negotiation procedure is completed and a specific AP obtains the TXOP, the AP may function as a Sharing AP, and the other AP that is allocated or shared with resources such as the TXOP may function as a Shared AP.

That is, the present embodiment proposes a method for performing negotiation between multiple APs to perform a transmission scheme for coordination between multiple APs (or coordination between APs in a multi-AP environment). Furthermore, the present embodiment proposes a method for defining information to be exchanged between the multiple APs during the negotiation process. Accordingly, based on the proposed negotiation information, APs that have successfully cooperated can perform a coordinated multi-AP scheme such as C-TDMA. In addition, based on the proposed negotiation information, the Sharing AP can share a TXOP with the Shared AP, and through this, the Shared AP may perform frame exchange with a non-AP STA (or UHR non-AP STA) within its BSS during the allocated TXOP. In addition, by proposing a negotiation method to effectively perform communication between the multiple APs, it is possible to perform appropriate scheduling between each AP, and thereby, it is possible to expect an increase in the overall network throughput.

The negotiation request frame may include at least one of first to eighth information.

The first information may include information for an identifier for a group of APs that configures coordination between the multiple APs. The second information may include information for identifiers for APs within the group. The third information may include information for a scheme for the coordination between the multiple AP. The fourth information may include information for an operating channel. The fifth information may include information for an operating bandwidth. The sixth information may include interval information for the TXOP. The seventh information may include information for low-latency traffic. The eighth information may include information for Ultra High Reliability (UHR) STA support.

The negotiation response frame may include at least one of the first to eighth information and ninth information.

The ninth information may include information for a status code. The information for the status code may include information for the acceptance or the rejection to the negotiation request frame.

The scheme for the coordination between the multiple APs may include Coordinated-Time Division Multiplexing Access (C-TDMA), Coordinated-Spatial Reuse (C-SR), Coordinated-beamforming (C-BF), or Coordinated-Orthogonal Frequency Division Multiple Access (C-OFMA).

The information for the operating channel may include information for a channel on which the first and second APs operate in common or information for a punctured channel of the first and second APs. A primary channel of the first AP may be included in the channel on which the second AP operates. The primary channel of the first AP may be included in the operating channel excluding the punctured channel of the second AP.

The information for the operating bandwidth may include information for a bandwidth in which the first and second APs operate in common or information for a maximum bandwidth of the first and second APs. The bandwidth of the first AP may be included within an entire bandwidth in which the second AP operates.

The information for the low-latency traffic may include information for a time-bound of the low-latency traffic required by the first or second AP or information for an arrival rate.

The information for the UHR STA support may include information on whether the first non-AP STA is supported only as a UHR non-AP STA. For example, based on the information for the UHR STA support being set to 0, the first non-AP STA may be set only as the UHR non-AP STA. Based on the information for the UHR STA support being set to 1, the first non-AP STA may be set as a High efficiency (HE) non-AP STA, an Extreme High Throughput (EHT) non-AP STA, or a UHR non-AP STA.

By adding the information for the UHR STA support to the coordination/negotiation request/response frame, it is possible to specify that the AP participating in the coordination between the multiple APs is an AP or BSS that only supports UHR non-AP STAs, thereby eliminating the need for the Sharing AP to define additional rules or signaling for the Shared AP.

Furthermore, the operations for determining the AP participating in the coordination between the multiple APs and transmitting the coordination/negotiation request frame to the AP are as follows.

The first AP may overhear a beacon frame from a neighboring AP. Based on the beacon frame, the first AP may determine an AP participating in the coordination between the multiple APs as the neighboring AP. Based on the beacon frame, the first AP may transmit the coordination/negotiation request frame to the neighboring AP.

The beacon frame may include a first bit. For example, based on the first bit being set to 0, the first bit may indicate that the neighboring AP participates in the coordination between the multiple APs. Based on the first bit being set to 1, the first bit may indicate that the neighboring AP does not participate in the coordination between the multiple APs. The neighboring AP may be the second AP.

This embodiment proposes a pair-to-pair negotiation procedure using the coordination/negotiation request frame and coordination/negotiation response frame. Furthermore, this embodiment can also propose a broadcast-based negotiation procedure. In this case, a trigger frame may be used instead of the coordination/negotiation request frame, and a TB (Trigger-Based) PPDU may be used instead of the coordination/negotiation response frame. In this case, the trigger frame may be broadcast.

After the second AP obtains the TXOP, the second AP may transmit a Multi User-Request to Send (MU-RTS) TXOP sharing (TXS) trigger frame to the first AP. The second AP may receive a Clear to Send (CTS) frame from the first AP in response to the MU-RTS TXS trigger frame. The MU-RTS TXS trigger frame may include allocation information for the portion of the TXOP.

In addition, after the second AP obtains the TXOP, the second AP may perform frame exchange with a second non-AP STA during the TXOP (or the portion of the TXOP). The second non-AP STA may be a non-AP STA within the BSS of the second AP, and may be a legacy non-AP STA or a UHR non-AP STA. Accordingly, the information for the UHR STA support may further include information on whether the second non-AP STA is supported only as a UHR non-AP STA.

### < Device configuration>

The technical features of the present disclosure may be applied to various devices and methods. For example, the technical features of the present disclosure may be performed/supported through the device(s) of FIG. 1 and/or FIG. 13. For example, the technical features of the present disclosure may be applied to only part of FIG. 1 and/or FIG. 13. For example, the technical features of the present disclosure may be implemented based on the processing chip(s) 114 and 124 of FIG. 1, or implemented based on the processor(s) 111 and 121 and the memory(s) 112 and 122, or implemented based on the processor 610 and the memory 620 of FIG. 13. For example, the device according to the present disclosure transmits a negotiation request frame to a second access point (AP); receives a negotiation response frame from the second AP; receives allocation information for a portion of the Transmission Opportunity (TXOP) from the second AP based on the negotiation request frame and the negotiation response frame; and performs frame exchange with a first non-AP station (STA) during the portion of the TXOP.

The technical features of the present disclosure may be implemented based on a computer readable medium (CRM). For example, a CRM according to the present disclosure is at least one computer readable medium including instructions designed to be executed by at least one processor.

The CRM may store instructions that perform operations including transmitting a negotiation request frame to a second access point (AP); receiving a negotiation response frame from the second AP; receiving allocation information for a portion of the Transmission Opportunity (TXOP) from the second AP based on the negotiation request frame and the negotiation response frame; and performing frame exchange with a first non-AP station (STA) during the portion of the TXOP. At least one processor may execute the instructions stored in the CRM according to the present disclosure. At least one processor related to the CRM of the present disclosure may be the processor 111, 121 of FIG. 1, the processing chip 114, 124 of FIG. 1, or the processor 610 of FIG. 13. Meanwhile, the CRM of the present disclosure may be the memory 112, 122 of FIG. 1, the memory 620 of FIG. 13, or a separate external memory/storage medium/disk.

The foregoing technical features of the present specification are applicable to various applications or business models. For example, the foregoing technical features may be applied for wireless communication of a device supporting artificial intelligence (AI).

Artificial intelligence refers to a field of study on artificial intelligence or methodologies for creating artificial intelligence, and machine learning refers to a field of study on methodologies for defining and solving various issues in the area of artificial intelligence. Machine learning is also defined as an algorithm for improving the performance of an operation through steady experiences of the operation.

An artificial neural network (ANN) is a model used in machine learning and may refer to an overall problem-solving model that includes artificial neurons (nodes) forming a network by combining synapses. The artificial neural network may be defined by a pattern of connection between neurons of different layers, a learning process of updating a model parameter, and an activation function generating an output value.

The artificial neural network may include an input layer, an output layer, and optionally one or more hidden layers. Each layer includes one or more neurons, and the artificial neural network may include synapses that connect neurons. In the artificial neural network, each neuron may output a function value of an activation function of input signals input through a synapse, weights, and deviations.

A model parameter refers to a parameter determined through learning and includes a weight of synapse connection and a deviation of a neuron. A hyper-parameter refers to a parameter to be set before learning in a machine learning algorithm and includes a learning rate, the number of iterations, a mini-batch size, and an initialization function.

Learning an artificial neural network may be intended to determine a model parameter for minimizing a loss function. The loss function may be used as an index for determining an optimal model parameter in a process of learning the artificial neural network.

Machine learning may be classified into supervised learning, unsupervised learning, and reinforcement learning.

Supervised learning refers to a method of training an artificial neural network with a label given for training data, wherein the label may indicate a correct answer (or result value) that the artificial neural network needs to infer when the training data is input to the artificial neural network. Unsupervised learning may refer to a method of training an artificial neural network without a label given for training data. Reinforcement learning may refer to a training method for training an agent defined in an environment to choose an action or a sequence of actions to maximize a cumulative reward in each state.

Machine learning implemented with a deep neural network (DNN) including a plurality of hidden layers among artificial neural networks is referred to as deep learning, and deep learning is part of machine learning. Hereinafter, machine learning is construed as including deep learning.

The foregoing technical features may be applied to wireless communication of a robot.

Robots may refer to machinery that automatically process or operate a given task with own ability thereof. In particular, a robot having a function of recognizing an environment and autonomously making a judgment to perform an operation may be referred to as an intelligent robot.

Robots may be classified into industrial, medical, household, military robots and the like according uses or fields. A robot may include an actuator or a driver including a motor to perform various physical operations, such as moving a robot joint. In addition, a movable robot may include a wheel, a brake, a propeller, and the like in a driver to run on the ground or fly in the air through the driver.

The foregoing technical features may be applied to a device supporting extended reality.

Extended reality collectively refers to virtual reality (VR), augmented reality (AR), and mixed reality (MR). VR technology is a computer graphic technology of providing a real-world object and background only in a CG image, AR technology is a computer graphic technology of providing a virtual CG image on a real object image, and MR technology is a computer graphic technology of providing virtual objects mixed and combined with the real world.

MR technology is similar to AR technology in that a real object and a virtual object are displayed together. However, a virtual object is used as a supplement to a real object in AR technology, whereas a virtual object and a real object are used as equal statuses in MR technology.

XR technology may be applied to a head-mount display (HMD), a head-up display (HUD), a mobile phone, a tablet PC, a laptop computer, a desktop computer, a TV, digital signage, and the like. A device to which XR technology is applied may be referred to as an XR device.

The claims recited in the present specification may be combined in a variety of ways. For example, the technical features of the method claims of the present specification may be combined to be implemented as a device, and the technical features of the device claims of the present specification may be combined to be implemented by a method. In addition, the technical characteristics of the method claim of the present specification and the technical characteristics of the device claim may be combined to be implemented as a device, and the technical characteristics of the method claim of the present specification and the technical characteristics of the device claim may be combined to be implemented by a method.

## Claims

1. A method in a wireless local area network (WLAN) system, the method comprising:
transmitting, by a first access point (AP), a negotiation request frame to a second AP;
receiving, by the first AP, a negotiation response frame from the second AP;
receiving, by the first AP, allocation information for a portion of the Transmission Opportunity (TXOP) from the second AP based on the negotiation request frame and the negotiation response frame; and
performing, by the first AP, frame exchange with a first non-AP station (STA) during the portion of the TXOP,
wherein the negotiation request frame includes negotiation information for coordination between multiple APs,
wherein the negotiation response frame includes information for an acceptance or rejection to the negotiation request frame based on the negotiation information,
wherein after the second AP obtains the TXOP based on the negotiation request frame and the negotiation response frame, the second AP is set as a Sharing AP that controls coordination between the multiple APs, and the first AP is set as a Shared AP that is allocated or shared with resources from the Sharing AP based on the negotiation information, and
wherein the first non-AP STA is a non-AP STA within a basic service set (BSS) of the first AP.

2. The method of claim 1, wherein the negotiation request frame includes at least one of first to eighth information,
wherein the first information includes information for an identifier for a group of APs that configures coordination between the multiple APs,
wherein the second information includes information for identifiers for APs within the group,
wherein the third information includes information for a scheme for the coordination between the multiple APs,
wherein the fourth information includes information for an operating channel,
wherein the fifth information includes information for an operating bandwidth,
wherein the sixth information includes interval information for the TXOP,
wherein the seventh information includes information for low-latency traffic, and
wherein the eighth information includes information for Ultra High Reliability (UHR) STA support.

3. The method of claim 2, wherein the negotiation response frame includes at least one of the first to eighth information and ninth information,
wherein the ninth information includes information for a status code, and
wherein the information for the status code includes information for the acceptance or the rejection to the negotiation request frame.

4. The method of claim 2, wherein the scheme for the coordination between the multiple APs includes Coordinated-Time Division Multiplexing Access (C-TDMA), Coordinated-Spatial Reuse (C-SR), Coordinated-beamforming (C-BF), or Coordinated-Orthogonal Frequency Division Multiple Access (C-OFMA).

5. The method of claim 2, further comprising:
overhearing, by the first AP, a beacon frame from a neighboring AP;
determining, by the first AP, an AP participating in the coordination between the multiple APs as the neighboring AP based on the beacon frame; and
transmitting, by the first AP, the negotiation request frame to the neighboring AP based on the beacon frame,
wherein the beacon frame includes a first bit,
wherein based on the first bit being set to 0, the first bit indicates that the neighboring AP participates in the coordination between the multiple APs,
wherein based on the first bit being set to 1, the first bit indicates that the neighboring AP does not participate in the coordination between the multiple APs, and
wherein the neighboring AP is the second AP.

6. The method of claim 5, wherein the information for the operating channel includes information for a channel on which the first and second APs operate in common or information for a punctured channel of the first and second APs,
wherein a primary channel of the first AP is included in the channel on which the second AP operates, and
wherein the primary channel of the first AP is included in the operating channel excluding the punctured channel of the second AP.

7. The method of claim 5, wherein the information for the operating bandwidth includes information for a bandwidth in which the first and second APs operate in common or information for a maximum bandwidth of the first and second APs, and
wherein the bandwidth of the first AP is included within an entire bandwidth in which the second AP operates.

8. The method of claim 5, wherein the information for the low-latency traffic includes information for a time-bound of the low-latency traffic required by the first or second AP or information for an arrival rate,
wherein the information for the UHR STA support includes information on whether the first non-AP STA is supported only as a UHR non-AP STA,
wherein based on the information for the UHR STA support being set to 0, the first non-AP STA is set only as the UHR non-AP STA, and
wherein based on the information for the UHR STA support being set to 1, the first non-AP STA is set as a High efficiency (HE) non-AP STA, an Extreme High Throughput (EHT) non-AP STA, or a UHR non-AP STA.

9. A first access point (AP) in a wireless local area network (WLAN) system, the first AP comprising:
a memory;
a transceiver; and
a processor being operatively connected to the memory and the transceiver,
wherein the processor is configured to:
transmit a negotiation request frame to a second AP;
receive a negotiation response frame from the second AP;
receive allocation information for a portion of the Transmission Opportunity (TXOP) from the second AP based on the negotiation request frame and the negotiation response frame; and
perform frame exchange with a first non-AP station (STA) during the portion of the TXOP,
wherein the negotiation request frame includes negotiation information for coordination between multiple APs,
wherein the negotiation response frame includes information for an acceptance or rejection to the negotiation request frame based on the negotiation information,
wherein after the second AP obtains the TXOP based on the negotiation request frame and the negotiation response frame, the second AP is set as a Sharing AP that controls coordination between the multiple APs, and the first AP is set as a Shared AP that is allocated or shared with resources from the Sharing AP based on the negotiation information, and
wherein the first non-AP STA is a non-AP STA within a basic service set (BSS) of the first AP.

10. A method in a wireless local area network (WLAN) system, the method comprising:
receiving, by a second access point (AP), a negotiation request frame from a first AP;
transmitting, by the second AP, a negotiation response frame to the first AP;
transmitting, by the second AP, allocation information for a portion of the Transmission Opportunity (TXOP) to the first AP based on the negotiation request frame and the negotiation response frame;
wherein the negotiation request frame includes negotiation information for coordination between multiple APs,
wherein the negotiation response frame includes information for an acceptance or rejection to the negotiation request frame based on the negotiation information,
wherein after the second AP obtains the TXOP based on the negotiation request frame and the negotiation response frame, the second AP is set as a Sharing AP that controls coordination between the multiple APs, and the first AP is set as a Shared AP that is allocated or shared with resources from the Sharing AP based on the negotiation information, and
wherein a first non-AP STA is a non-AP STA within a basic service set (BSS) of the first AP.

11. The method of claim 10, wherein the negotiation request frame includes at least one of first to eighth information,
wherein the first information includes information for an identifier for a group of APs that configures coordination between the multiple APs,
wherein the second information includes information for identifiers for APs within the group,
wherein the third information includes information for a scheme for the coordination between the multiple APs,
wherein the fourth information includes information for an operating channel,
wherein the fifth information includes information for an operating bandwidth,
wherein the sixth information includes interval information for the TXOP,
wherein the seventh information includes information for low-latency traffic, and
wherein the eighth information includes information for Ultra High Reliability (UHR) STA support.

12. The method of claim 11, wherein the negotiation response frame includes at least one of the first to eighth information and ninth information,
wherein the ninth information includes information for a status code, and
wherein the information for the status code includes information for the acceptance or the rejection to the negotiation request frame.

13. The method of claim 11, wherein the scheme for the coordination between the multiple APs includes Coordinated-Time Division Multiplexing Access (C-TDMA), Coordinated-Spatial Reuse (C-SR), Coordinated-beamforming (C-BF), or Coordinated-Orthogonal Frequency Division Multiple Access (C-OFMA).

14. The method of claim 11, wherein the information for the operating channel includes information for a channel on which the first and second APs operate in common or information for a punctured channel of the first and second APs,
wherein a primary channel of the first AP is included in the channel on which the second AP operates, and
wherein the primary channel of the first AP is included in the operating channel excluding the punctured channel of the second AP.

15. The method of claim 11, wherein the information for the operating bandwidth includes information for a bandwidth in which the first and second APs operate in common or information for a maximum bandwidth of the first and second APs, and
wherein the bandwidth of the first AP is included within an entire bandwidth in which the second AP operates.

16. The method of claim 11, wherein the information for the low-latency traffic includes information for a time-bound of the low-latency traffic required by the first or second AP or information for an arrival rate,
wherein the information for the UHR STA support includes information on whether the first non-AP STA is supported only as a UHR non-AP STA,
wherein based on the information for the UHR STA support being set to 0, the first non-AP STA is set only as the UHR non-AP STA, and
wherein based on the information for the UHR STA support being set to 1, the first non-AP STA is set as a High efficiency (HE) non-AP STA, an Extreme High Throughput (EHT) non-AP STA, or a UHR non-AP STA.

17. A second access point (AP) in a wireless local area network (WLAN) system, the second AP comprising:
a memory;
a transceiver; and
a processor being operatively connected to the memory and the transceiver,
wherein the processor is configured to:
receive a negotiation request frame from a first AP;
transmit a negotiation response frame to the first AP;
transmit allocation information for a portion of the Transmission Opportunity (TXOP) to the first AP based on the negotiation request frame and the negotiation response frame;
wherein the negotiation request frame includes negotiation information for coordination between multiple APs,
wherein the negotiation response frame includes information for an acceptance or rejection to the negotiation request frame based on the negotiation information,
wherein after the second AP obtains the TXOP based on the negotiation request frame and the negotiation response frame, the second AP is set as a Sharing AP that controls coordination between the multiple APs, and the first AP is set as a Shared AP that is allocated or shared with resources from the Sharing AP based on the negotiation information, and
wherein a first non-AP STA is a non-AP STA within a basic service set (BSS) of the first AP.

18. A computer readable medium including an instruction being executed by at least one processor and performing a method comprising the steps of:
transmitting a negotiation request frame to a second access point (AP);
receiving a negotiation response frame from the second AP;
receiving allocation information for a portion of the Transmission Opportunity (TXOP) from the second AP based on the negotiation request frame and the negotiation response frame; and
performing frame exchange with a first non-AP station (STA) during the portion of the TXOP,
wherein the negotiation request frame includes negotiation information for coordination between multiple APs,
wherein the negotiation response frame includes information for an acceptance or rejection to the negotiation request frame based on the negotiation information,
wherein after the second AP obtains the TXOP based on the negotiation request frame and the negotiation response frame, the second AP is set as a Sharing AP that controls coordination between the multiple APs, and a first AP is set as a Shared AP that is allocated or shared with resources from the Sharing AP based on the negotiation information, and
wherein a first non-AP STA is a non-AP STA within a basic service set (BSS) of the first AP.

19. A device in a wireless local area network (WLAN) system, the device comprising:
a memory; and
a processor being operatively connected to the memory,
wherein the processor is configured to:
transmit a negotiation request frame to a second access point (AP);
receive a negotiation response frame from the second AP;
receive allocation information for a portion of the Transmission Opportunity (TXOP) from the second AP based on the negotiation request frame and the negotiation response frame; and
perform frame exchange with a first non-AP station (STA) during the portion of the TXOP,
wherein the negotiation request frame includes negotiation information for coordination between multiple APs,
wherein the negotiation response frame includes information for an acceptance or rejection to the negotiation request frame based on the negotiation information,
wherein after the second AP obtains the TXOP based on the negotiation request frame and the negotiation response frame, the second AP is set as a Sharing AP that controls coordination between the multiple APs, and a first AP is set as a Shared AP that is allocated or shared with resources from the Sharing AP based on the negotiation information, and
wherein the first non-AP STA is a non-AP STA within a basic service set (BSS) of the first AP.
